# EUROPEAN PATENT APPLICATION

(11) **EP 4 553 680 A1**
(43) Date of publication of application: **14.05.2025**
(21) Application number: 22953593.5
(22) Date of filing: 04.08.2022
(51) Int. Cl.: G06F 17/00, G06F 3/06

(54) **TRANSACTION PROCESSING METHOD AND APPARATUS, AND NODE AND COMPUTER-READABLE STORAGE MEDIUM**

(71) Applicant: Huawei Technologies Co., Ltd., Shenzhen, Guangdong 518129 (CN)
(72) Inventor: ZHANG, Xu, Shenzhen, Guangdong 518129 (CN); LI, Dongxu, Shenzhen, Guangdong 518129 (CN)
(74) Representative: Isarpatent
(86) International application number: PCT/CN2022/110352
(87) International publication number: WO 2024/026784

(57) **Abstract**

This application discloses a transaction processing method and apparatus, a node, and a storage medium, and pertains to the field of data access technologies. In embodiments of this application, a first node reads a write object from a second node and reads a read object from a third node. After modifying a data item of the write object, the first node sends a write locking message to the second node and sends a read locking message to the third node. In this way, the second node and the third node may add locks to objects and verify version values in no particular sequence. In comparison with a related technology in which a version value of the read object is verified after a lock is successfully added to the write object and version value verification succeeds, this shortens transaction processing duration. In addition, even if the third node successfully verifies the version value of the read object before the second node successfully adds the lock to the write object, because a read lock is further successfully added to the read object when the version value of the read object is successfully verified, the read object is not tampered with by another transaction before the second node successfully adds the write lock to the write object, thereby ensuring correctness of submitted data.

## Description

### TECHNICAL FIELD

This application relates to the field of data access technologies, and in particular, to a transaction processing method and apparatus, a node, and a computer-readable storage medium.

### BACKGROUND

Access of an application to a storage object in a database may be implemented through a plurality of transactions. One transaction includes information about at least one storage object to be accessed and information about at least one access operation to be performed on the at least one storage object. The at least one access operation includes a read operation and/or a write operation. A storage object on which the read operation is performed may be referred to as a read object, and a storage object on which the write operation is performed is referred to as a write object. Currently, in a distributed scenario such as a data center, storage objects in the database are distributed on a plurality of physical nodes. In addition, to ensure data reliability, after a storage object is stored in a corresponding physical node, the storage object may be further backed up to another physical node. The physical node corresponding to the storage object is a primary node in which the storage object is located, and the another physical node for backing up the storage object is a backup node of the storage object. In this way, when there are a plurality of storage objects to be accessed in one transaction, primary nodes and backup nodes in which the plurality of storage objects are located may be different. In this case, a transaction initiation node may process the transaction based on an optimistic concurrency control (optimistic concurrency control, OCC) protocol, to implement concurrency control of the transaction.

Currently, in the OCC protocol, the transaction initiation node first reads, based on a to-be-processed transaction, a storage object including a version value from a primary node in which a to-be-accessed storage object is located. If there are a plurality of storage objects to be read and the plurality of storage objects include read objects and write objects, the transaction initiation node first modifies data items of the write objects in the plurality of storage objects. After the data items of the write objects are modified, the transaction initiation node interacts with primary nodes in which the write objects are located, to add locks to the write objects and verify version values of the write objects. After the locks are successfully added to the write objects and the version values are successfully verified, the transaction initiation node then interacts with primary nodes in which the read objects in the plurality of storage objects are located, to verify version values of the read objects. After the version values of the read objects are successfully verified, the transaction initiation node submits updated data items of the write objects to the primary nodes and backup nodes of the write objects. After the submission succeeds, the transaction initiation node may generate a transaction completion notification, to notify an upper-layer application that processing of the transaction is completed.

It can be learned that, in the foregoing transaction processing process, after the data item of the write object is modified, the transaction initiation node needs to sequentially interact with the primary node in which the write object is located, the primary node in which the read object is located, and the backup node of the write object a plurality of times to complete submission of the updated data item, thereby notifying the upper-layer application that processing of the transaction is completed. Consequently, this is time-consuming.

### SUMMARY

Embodiments of this application provide a transaction processing method and apparatus, a node, and a computer-readable storage medium, to shorten a transaction processing delay and improve transaction processing efficiency.

According to a first aspect, this application provides a transaction processing method, applied to a first node. The method includes: based on information about a write object and information about a read object that are included in a first transaction, reading the write object from a second node, and reading the read object from a third node, where the write object includes a first data item, the second node is a primary node in which the write object is located, and the third node is a primary node in which the read object is located; modifying the first data item to obtain an updated first data item; sending a write locking message to the second node, and sending a read locking message to the third node, where the read locking message is used to add a read lock to the read object and detect whether the read object read by the first node is correct; and in a case in which a write locking success response from the second node and a read locking success response from the third node are received, submitting the updated first data item to the second node and a fourth node, where the write locking success response indicates that a write lock is successfully added to the write object and the write object that is read is correct, the read locking success response indicates that the read lock is successfully added to the read object and the read object that is read is correct, and the fourth node is a backup node of the write object.

In embodiments of this application, the first node reads the write object from the second node and reads the read object from the third node. After modifying a data item of the write object, the first node may send the write locking message to the second node and send the read locking message to the third node. In this way, the second node and the third node may add locks to objects and verify version values in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the third node first returns a read locking success response and the second node then returns a write locking success response, that is, even if the third node successfully verifies the version value of the read object before the second node successfully adds the lock to the write object, because the third node further successfully adds the read lock to the read object when the version value of the read object is successfully verified, the read object is not tampered with by another transaction before the second node successfully adds the write lock to the write object, thereby ensuring correctness of submitted data. It can be learned that in embodiments of this application, transaction processing duration is shortened while correctness of submitted data is ensured.

Optionally, an implementation process of the sending a write locking message to the second node, and sending a read locking message to the third node may be: sending the write locking message to the second node, and sending the read locking message to the third node simultaneously; or sending the write locking message to the second node, and sending the read locking message to the third node when the write locking success response is not received after the write locking message is sent; or sending the read locking message to the third node, and sending the write locking message to the second node when the read locking success response is not received after the read locking message is sent.

In embodiments of this application, the read locking message indicates the third node not only to verify the version value of the read object, but also indicates the third node to add the lock to the read object. Therefore, even if the third node successfully verifies the version value of the read object before the second node successfully adds the lock to the write object, the read object is not tampered with by another transaction before the write lock is successfully added to the write object. It can be learned that the first node does not need to send the read locking message after receiving the write locking success response from the second node. In other words, verification of the read object does not necessarily depend on locking and verification of the write object, and data correctness can also be ensured. In addition, the verification of the read object does not need to be performed after a lock is successfully added to the write object, and locking and verification of the read object and the locking and verification of the write object can be performed completely in parallel or in a very short time difference. Therefore, a transaction processing delay can be shortened, thereby improving transaction processing efficiency.

Optionally, when submitting the updated first data item to the second node and the fourth node, the first node may further send a read lock release message to the third node. The read lock release message indicates the third node to release the read lock of the read object.

The first node may send the read lock release message to the third node in a process of submitting the updated first data item. In this way, this step and the step of submitting the updated first data item may be performed in parallel, thereby shortening a transaction processing delay.

Optionally, the first node may alternatively send the read lock release message to the third node after the updated first data item is successfully submitted. In this way, during the submission process, another transaction cannot modify the read object.

Optionally, in a case in which a write locking failure response from the second node and/or a read locking failure response from the third node are/is received, a procedure abort message is sent to the second node and the third node. The write locking failure response indicates that the write lock fails to be added to the write object and/or the write object read by the first node is incorrect. The read locking failure response indicates that the read lock fails to be added to the read object and/or the read object read by the first node is incorrect. The procedure abort message indicates to abort processing of the first transaction, and the procedure abort message further indicates the second node and the third node to unlock an object to which a lock is successfully added.

In embodiments of this application, if either operation of verifying and locking the read object and verifying and locking the write object fails, the first node may abort processing of the first transaction, and indicate the second node and the third node to release a lock that is added to a corresponding object based on the first transaction.

Optionally, both the write object and the read object that are read by the first node include version values. The write locking message includes a version value of the write object read by the first node. The read locking message includes a version value of the read object read by the first node. That the write object or the read object read by the first node is correct means that a version value of a corresponding object read by the first node meets a verification condition.

Optionally, the verification condition means that the version value of the corresponding object read by the first node is an intermediate-state version value and a version value of the corresponding object in a corresponding primary node is a stable-state version value corresponding to the version value of the corresponding object read by the first node; or the verification condition means that the version value of the corresponding object read by the first node is a stable-state version value and a version value of the corresponding object in a corresponding primary node is the same as the version value of the corresponding object read by the first node. The intermediate-state version value indicates that an updated data item of the corresponding object is not successfully submitted, and the stable-state version value indicates that the updated data item of the corresponding object is successfully submitted.

Optionally, the write locking message further includes the updated first data item. When a version value of an object includes two types, namely, the intermediate-state version value and the stable-state version value, an implementation process of the submitting the updated first data item to the second node and a fourth node may include: sending a primary submission message to the second node, and sending a backup submission message to the fourth node, where the backup submission message includes the updated first data item; and in a case in which a primary submission success response from the second node and a backup submission success response from the fourth node are received, determining that the updated first data item is successfully submitted. The primary submission success response is sent by the second node after updating a data item and a first version value of the stored write object based on the primary submission message and the updated first data item. An updated write object includes a second version value. The second version value is a next intermediate-state version value of the first version value. The backup submission success response is sent by the fourth node after the backup submission message is received.

In embodiments of this application, a version value of any object may include a stable-state version value and an intermediate-state version value. The intermediate-state version value indicates that the updated data item of the corresponding object is not successfully submitted, and the stable-state version value indicates that the updated data item of the corresponding object is successfully submitted. On this basis, switching between the two version values can identify a state of the write object. Therefore, even if the first node sends the primary submission message before receiving the backup submission success response, the second node may also switch the version value of the write object to the intermediate-state version value, to indicate that the write object is in a modification process. In this way, for another transaction that needs to modify the write object, version value verification of the write object can be performed based on the intermediate-state version value, thereby ensuring correctness of data. In this way, through switching between the two version values, a write conflict in a transaction for a corresponding object is avoided, and correctness of data read by the transaction is ensured. In addition, sending of the primary submission message can be independent of receiving of the backup submission success response. In this way, sending of the primary submission message and sending of the backup submission message may be performed in a very short time difference or even in parallel, thereby shortening duration required from starting to process the first transaction to notifying an upper-layer application that processing of the transaction is completed.

Optionally, an implementation process of sending a primary submission message to the second node, and sending a backup submission message to the fourth node may be: sending the primary submission message to the second node, and sending the backup submission message to the fourth node simultaneously; or sending the backup submission message to the fourth node, and sending the primary submission message to the second node when the backup submission success response is not received after the backup submission message is sent; or sending the primary submission message to the second node, and sending the backup submission message to the fourth node when the primary submission success response is not received after the primary submission message is sent.

Optionally, in a case in which the primary submission success response from the second node and/or the backup submission success response from the fourth node are/is not received, the first node may send a procedure abort message to the second node, the third node, and the fourth node. The procedure abort message indicates to abort processing of the first transaction, and the procedure abort message further indicates the second node and the third node to unlock an object to which a lock is successfully added.

Optionally, in a case in which a version value of any object includes an intermediate-state version value and a stable-state version value, after the updated first data item is successfully submitted, the first node may further send a write lock release message to the second node. The write lock release message indicates the second node to update the second version value to a third version value and release a write lock of the updated write object. The third version value is a stable-state version value corresponding to the second version value.

In this embodiment of this application, after the updated first data item is successfully submitted, the first node may indicate the second node to update the version value of the write object to the stable-state version value, to represent that the write object enters a stable state, and unlock the write object at the same time. In this way, another subsequent transaction can access the write object.

Optionally, after the updated first data item is successfully submitted, the first node may send a first deletion message to the second node, where the first deletion message indicates the second node to delete the write locking message and the primary submission message; and send a second deletion message to the fourth node, where the second deletion message indicates the fourth node to update the data item and the first version value of the stored write object based on the backup submission message and delete the backup submission message.

Optionally, after the updated first data item is successfully submitted, the first node may further notify an upper-layer application that processing of the transaction is completed.

According to a second aspect, a transaction processing method is provided, applied to a first node. The method includes: based on information about a write object and information about a read object that are included in a first transaction, reading the write object from a second node, and reading the read object from a third node, where both the write object and the read object include version values, the write object includes a first data item, the second node is a primary node in which the write object is located, and the third node is a primary node in which the read object is located; modifying the first data item to obtain an updated first data item; in a case in which a write lock is successfully added to the write object in the second node and both the write object and the read object that are read by the first node are correct, sending, to the second node, a primary submission message for submitting the updated first data item, and sending, to a fourth node, a backup submission message for submitting the updated first data item, where that the write object or the read object that is read by the first node is correct means that a version value of a corresponding object read by the first node is an intermediate-state version value and a version value of the corresponding object in a corresponding primary node is a stable-state version value corresponding to the version value of the corresponding object read by the first node, or means that a version value of a corresponding object read by the first node is a stable-state version value and a version value of the corresponding object in a corresponding primary node is the same as the version value of the corresponding object read by the first node, where the intermediate-state version value indicates that an updated data item of the corresponding object is not successfully submitted, the stable-state version value indicates that the updated data item of the corresponding object is successfully submitted, and the fourth node is a backup node of the write object; and in a case in which a primary submission success response from the second node and a backup submission success response from the fourth node are received, generating a transaction completion notification, where the primary submission success response is sent by the second node after updating a data item and a first version value of the stored write object based on the primary submission message and the updated first data item, an updated write object includes a second version value, the second version value is a next intermediate-state version value of the first version value, and the backup submission success response is sent by the fourth node after the backup submission message is received.

In embodiments of this application, a version value of any object may include a stable-state version value and an intermediate-state version value. The intermediate-state version value indicates that the updated data item of the corresponding object is not successfully submitted, and the stable-state version value indicates that the updated data item of the corresponding object is successfully submitted. On this basis, switching between the two version values can identify a state of the write object. Therefore, even if the first node sends the primary submission message before receiving the backup submission success response, the second node may also switch the version value of the write object to the intermediate-state version value, to indicate that the write object is in a modification process. In this way, for another transaction that needs to modify the write object, version value verification of the write object can be performed based on the intermediate-state version value, thereby ensuring correctness of data. In this way, through switching between the two version values, a write conflict in a transaction for a storage object is avoided, and correctness of data read by the transaction is ensured. In addition, sending of the primary submission message can be independent of receiving of the backup submission success response. In this way, sending of the primary submission message and sending of the backup submission message may be performed in a very short time difference or even in parallel, thereby shortening duration required from starting to process the first transaction to notifying an upper-layer application that processing of the transaction is completed.

Optionally, an implementation process of the sending, to the second node, a primary submission message for submitting the updated first data item, and sending, to a fourth node, a backup submission message for submitting the updated first data item may be: sending the primary submission message to the second node, and sending the backup submission message to the fourth node simultaneously; or sending the backup submission message to the fourth node, and sending the primary submission message to the second node when the backup submission success response is not received after the backup submission message is sent; or sending the primary submission message to the second node, and sending the backup submission message to the fourth node when the primary submission success response is not received after the primary submission message is sent.

Optionally, after generating the transaction completion notification, the first node may further send a write lock release message to the second node. The write lock release message indicates the second node to update the second version value to a third version value and release a write lock of the updated write object. The third version value is a stable-state version value corresponding to the second version value.

Optionally, after modifying a data item of the write object to obtain the updated first data item, the first node may send a write locking message to the second node. The write locking message indicates the second node to add the write lock to the write object and verify whether the write object is correct. When receiving a write locking success response sent by the second node, the first node sends a verification message to the third node. The verification message indicates the third node to verify whether the read object read by the first node is correct. When a verification success response sent by the third node is received, it is determined that the write lock is successfully added to the write object in the second node and the write object and the read object that are read by the first node are correct.

Optionally, after modifying a data item of the write object to obtain the updated first data item, the first node may send a write locking message to the second node, and send a read locking message to the third node. The write locking message indicates the second node to add the write lock to the write object and detect whether the write object read by the first node is correct. The read locking message indicates the third node to add a read lock to the read object and detect whether the read object read by the first node is correct. When a write locking success response from the second node and a read locking success response from the third node are received, it is determined that the write lock is successfully added to the write object in the second node and the write object and the read object that are read by the first node are both correct.

Optionally, if the first node sends a read locking message to the third node, in a process of sending the primary submission message to the second node and sending the backup submission message to the fourth node, or when receiving the primary submission success response and the backup submission success response, the first node may further send a read lock release message to the third node, to indicate the third node to release the read lock that is added to the read object based on the first transaction.

According to a third aspect, a transaction processing apparatus is provided. The transaction processing apparatus is deployed in a first node. The transaction processing apparatus includes at least one module, and the at least one module is configured to implement the transaction processing method according to the first aspect. For example, the at least one module includes a reading module, a modification module, a sending module, and a submission module.

The reading module is configured to: based on information about a write object and information about a read object that are included in a first transaction, read the write object from a second node, and read the read object from a third node. The write object includes a first data item, the second node is a primary node in which the write object is located, and the third node is a primary node in which the read object is located. The modification module is configured to modify the first data item to obtain an updated first data item. The sending module is configured to send a write locking message to the second node, and send a read locking message to the third node. The read locking message is used to add a read lock to the read object and detect whether the read object read by the first node is correct. The submission module is configured to: in a case in which a write locking success response from the second node and a read locking success response from the third node are received, submit the updated first data item to the second node and a fourth node. The write locking success response indicates that a write lock is successfully added to the write object and the write object that is read is correct. The read locking success response indicates that the read lock is successfully added to the read object and the read object that is read is correct. The fourth node is a backup node of the write object.

Optionally, the sending module is mainly configured to: send the write locking message to the second node, and send the read locking message to the third node simultaneously; or send the write locking message to the second node, and send the read locking message to the third node when the write locking success response is not received after the write locking message is sent; or send the read locking message to the third node, and send the write locking message to the second node when the read locking success response is not received after the read locking message is sent.

Optionally, the sending module is further configured to: when the submission module submits the updated first data item to the second node and the fourth node, send a read lock release message to the third node. The read lock release message indicates the third node to release the read lock of the read object.

Optionally, the sending module is further configured to: in a case in which a write locking failure response from the second node and/or a read locking failure response from the third node are/is received, send a procedure abort message to the second node and the third node. The write locking failure response indicates that the write lock fails to be added to the write object and/or the write object read by the first node is incorrect. The read locking failure response indicates that the read lock fails to be added to the read object and/or the read object read by the first node is incorrect. The procedure abort message indicates to abort processing of the first transaction. The procedure abort message further indicates the second node and the third node to unlock an object to which a lock is successfully added.

Optionally, both the write object and the read object that are read by the first node include version values. The write locking message includes a version value of the write object read by the first node. The read locking message includes a version value of the read object read by the first node. That the write object or the read object read by the first node is correct means that a version value of a corresponding object read by the first node meets a verification condition.

Optionally, the verification condition means that the version value of the corresponding object read by the first node is an intermediate-state version value and a version value of the corresponding object in a corresponding primary node is a stable-state version value corresponding to the version value of the corresponding object read by the first node; or the verification condition means that the version value of the corresponding object read by the first node is a stable-state version value and a version value of the corresponding object in a corresponding primary node is the same as the version value of the corresponding object read by the first node. The intermediate-state version value indicates that an updated data item of the corresponding object is not successfully submitted, and the stable-state version value indicates that the updated data item of the corresponding object is successfully submitted.

Optionally, the write locking message further includes the updated first data item. The submission module is mainly configured to: send a primary submission message to the second node, and send a backup submission message to the fourth node, where the backup submission message includes the updated first data item; and in a case in which a primary submission success response from the second node and a backup submission success response from the fourth node are received, determine that the updated first data item is successfully submitted. The primary submission success response is sent by the second node after updating a data item and a first version value of the stored write object based on the primary submission message and the updated first data item. An updated write object includes a second version value. The second version value is a next intermediate-state version value of the first version value. The backup submission success response is sent by the fourth node after the backup submission message is received.

Optionally, the submission module is mainly configured to: send the primary submission message to the second node, and send the backup submission message to the fourth node simultaneously; or send the backup submission message to the fourth node, and send the primary submission message to the second node when the backup submission success response is not received after the backup submission message is sent; or send the primary submission message to the second node, and send the backup submission message to the fourth node when the primary submission success response is not received after the primary submission message is sent.

Optionally, the sending module is further configured to: in a case in which the primary submission success response from the second node and/or the backup submission success response from the fourth node are/is not received, send a procedure abort message to the second node, the third node, and the fourth node. The procedure abort message indicates to abort processing of the first transaction, and the procedure abort message further indicates the second node and the third node to unlock an object to which a lock is successfully added.

Optionally, the sending module is further configured to: send a write lock release message to the second node. The write lock release message indicates the second node to update the second version value to a third version value and release a write lock of the updated write object. The third version value is a stable-state version value corresponding to the second version value.

Optionally, the sending module is further configured to: send a first deletion message to the second node, where the first deletion message indicates the second node to delete the write locking message and the primary submission message; and send a second deletion message to the fourth node, where the second deletion message indicates the fourth node to update the data item and the first version value of the stored write object based on the backup submission message and delete the backup submission message.

According to a fourth aspect, a transaction processing apparatus is provided. The transaction processing apparatus is deployed in a first node. The transaction processing apparatus includes at least one module, and the at least one module is configured to implement the transaction processing method according to the second aspect. For example, the at least one module includes a reading module, a modification module, a submission module, and a generation module.

The reading module is configured to: based on information about a write object and information about a read object that are included in a first transaction, read the write object from a second node, and read the read object from a third node. Both the write object and the read object include version values. The write object includes a first data item, the second node is a primary node in which the write object is located, and the third node is a primary node in which the read object is located. The modification module is configured to modify the first data item to obtain an updated first data item. The submission module is configured to: in a case in which a write lock is successfully added to the write object in the second node and both the write object and the read object that are read by the first node are correct, send, to the second node, a primary submission message for submitting the updated first data item, and send, to a fourth node, a backup submission message for submitting the updated first data item. That the write object or the read object that is read by the first node is correct means that a version value of a corresponding object read by the first node is an intermediate-state version value and a version value of the corresponding object in a corresponding primary node is a stable-state version value corresponding to the version value of the corresponding object read by the first node, or means that a version value of a corresponding object read by the first node is a stable-state version value and a version value of the corresponding object in a corresponding primary node is the same as the version value of the corresponding object read by the first node. The intermediate-state version value indicates that an updated data item of the corresponding object is not successfully submitted, the stable-state version value indicates that the updated data item of the corresponding object is successfully submitted, and the fourth node is a backup node of the write object. The generation module is configured to: in a case in which a primary submission success response from the second node and a backup submission success response from the fourth node are received, generate a transaction completion notification. The primary submission success response is sent by the second node after updating a data item and a first version value of the stored write object based on the primary submission message and the updated first data item. An updated write object includes a second version value, the second version value is a next intermediate-state version value of the first version value, and the backup submission success response is sent by the fourth node after the backup submission message is received.

Optionally, the submission module is mainly configured to: send the primary submission message to the second node, and send the backup submission message to the fourth node simultaneously; or send the backup submission message to the fourth node, and send the primary submission message to the second node when the backup submission success response is not received after the backup submission message is sent; or send the primary submission message to the second node, and send the backup submission message to the fourth node when the primary submission success response is not received after the primary submission message is sent.

Optionally, the apparatus further includes: a sending module, configured to send a write lock release message to the second node. The write lock release message indicates the second node to update the second version value to a third version value and release a write lock of the updated write object, and the third version value is a stable-state version value corresponding to the second version value.

Optionally, the sending module is further configured to: after the data item of the write object is modified to obtain the updated first data item, send a write locking message to the second node. The write locking message indicates the second node to add the write lock to the write object and verify whether the write object read by the first node is correct. When a write locking success response sent by the second node is received, a verification message is sent to the third node. The verification message indicates the third node to verify whether the read object read by the first node is correct. When a verification success response sent by the third node is received, it is determined that the write lock is successfully added to the write object in the second node and the write object and the read object that are read by the first node are both correct.

Optionally, the sending module is further configured to: send a write locking message to the second node, and send a read locking message to the third node. The write locking message indicates the second node to add the write lock to the write object and detect whether the write object read by the first node is correct. The read locking message indicates the third node to add a read lock to the read object and detect whether the read object read by the first node is correct. When a write locking success response from the second node and a read locking success response from the third node are received, it is determined that the write lock is successfully added to the write object in the second node and the write object and the read object that are read by the first node are both correct.

Optionally, if the first node sends a read locking message to the third node, in a process of sending the primary submission message to the second node and sending the backup submission message to the fourth node, or when receiving the primary submission success response and the backup submission success response, the sending module is further configured to send a read lock release message to the third node, to indicate the third node to release the read lock that is added to the read object based on the first transaction.

According to a fifth aspect, a node is provided. The node includes a processor and a memory. The memory is configured to store at least one program instruction or code that supports the node in performing the transaction processing method provided in the first aspect or the second aspect, and store data for implementing the transaction processing method provided in the first aspect or the second aspect. The processor is configured to execute the program instruction or the code stored in the memory.

According to a sixth aspect, a computer-readable storage medium is provided. The computer-readable storage medium stores instructions. When the instructions are run on a computer, the computer is enabled to perform the transaction processing method in the first aspect or the second aspect.

According to a seventh aspect, a computer program product including instructions is provided. When the computer program product runs on a computer, the computer is enabled to perform the transaction processing method in the first aspect or the second aspect.

The technical solutions provided in embodiments of this application may include at least the following beneficial effects.

In embodiments of this application, the first node reads the write object from the second node, and reads the read object from the third node. After the data item of the write object is modified, the write locking message may be sent to the second node in which the write object is located, and the read locking message may be sent to the third node in which the read object is located. In this way, the second node and the third node may add locks to objects and verify version values in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the third node first returns a read locking success response and the second node then returns a write locking success response, that is, even if the third node successfully verifies the version value of the read object before the second node successfully adds the lock to the write object, because the third node further successfully adds the read lock to the read object when the version value of the read object is successfully verified, the read object is not tampered with by another transaction before the second node successfully adds the write lock to the write object, thereby ensuring correctness of submitted data. It can be learned that in embodiments of this application, transaction processing duration is shortened while correctness of submitted data is ensured.

### BRIEF DESCRIPTION OF DRAWINGS

FIG. 1 is a diagram of a system architecture related to a transaction processing method according to an embodiment of this application;
FIG. 2 is a diagram of another system architecture related to a transaction processing method according to an embodiment of this application;
FIG. 3 is a time sequence diagram of interaction between nodes in a transaction processing procedure according to a related technology;
FIG. 4 is a flowchart of a transaction processing method according to an embodiment of this application;
FIG. 5 is a diagram of a data structure of a storage object according to an embodiment of this application;
FIG. 6 is a flowchart of another transaction processing method according to an embodiment of this application;
FIG. 7A, FIG. 7B, and FIG. 7C are a first flowchart of interaction between nodes to process a transaction according to an embodiment of this application;
FIG. 8 is a time sequence diagram of interaction between nodes in a first transaction processing procedure according to an embodiment of this application;
FIG. 9A, FIG. 9B, and FIG. 9C are a second flowchart of interaction between nodes to process a transaction according to an embodiment of this application;
FIG. 10 is a time sequence diagram of interaction between nodes in a second transaction processing procedure according to an embodiment of this application;
FIG. 11A, FIG. 11B, and FIG. 11C are a third flowchart of interaction between nodes to process a transaction according to an embodiment of this application;
FIG. 12 is a time sequence diagram of interaction between nodes in a third transaction processing procedure according to an embodiment of this application;
FIG. 13 is a diagram of a structure of a transaction processing apparatus according to an embodiment of this application; and
FIG. 14 is a diagram of a structure of another transaction processing apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, a system architecture in embodiments of this application is described first.

The transaction processing method provided in embodiments of this application may be used to process a distributed transaction in a distributed scenario such as a data center. The distributed transaction means that storage objects to be accessed in a transaction are distributed in different nodes.

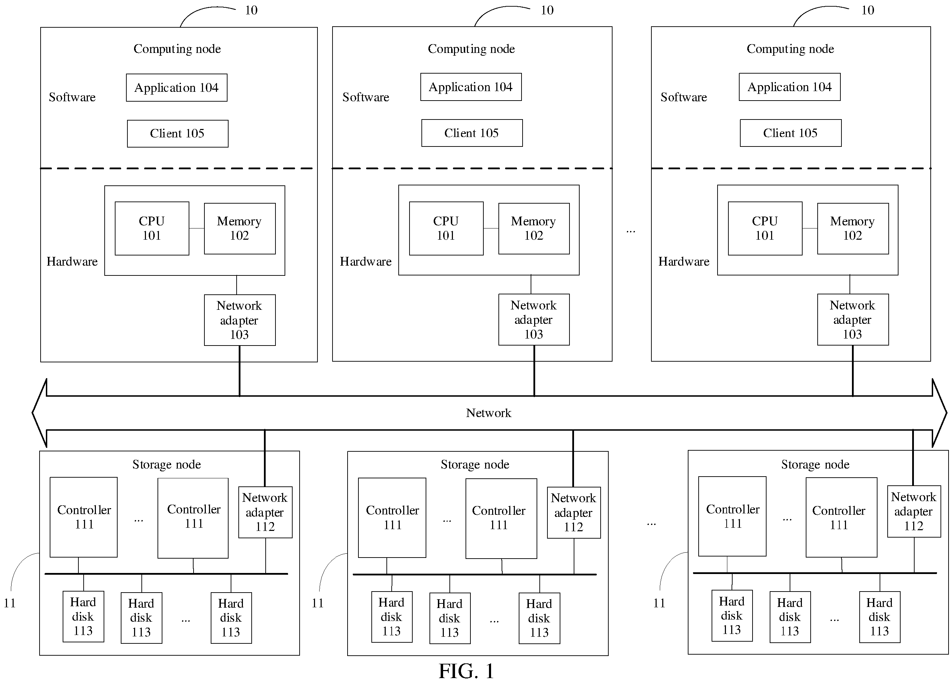

Based on this, FIG. 1 is a diagram of a system architecture related to a transaction processing method according to an embodiment of this application. As shown in FIG. 1, the system includes a computing node cluster and a storage node cluster. The computing node cluster includes one or more computing nodes 10 (FIG. 1 shows three computing nodes 10, but is not limited to three computing nodes 10). The computing nodes 10 may communicate with each other. The computing node 10 is a computing device, such as a server or a desktop computer.

At a hardware layer, as shown in FIG. 1, the computing node 10 includes at least a processor 101, a memory 102, and a network adapter 103.

The processor 101 is a central processing unit (central processing unit, CPU), and is configured to process a data access request from the outside of the computing node 10 or a request generated inside the computing node 10. The data access request includes a read request and a write request.

The memory 102 is an internal memory that directly exchanges data with the processor 101. The memory can read and write data at a high speed at any time, and serves as a temporary data memory of an operating system or another running program. The memory 102 includes at least two types of memories. For example, the memory may be a random access memory, or may be a read-only memory (read-only memory, ROM). For example, the random access memory is a dynamic random access memory (dynamic random access memory, DRAM) or a storage class memory (storage class memory, SCM). However, the DRAM and the SCM are merely examples for description in this embodiment. The memory 102 may further include another random access memory, for example, a static random access memory (Static Random Access Memory, SRAM). For example, the read-only memory may be a programmable read-only memory (Programmable Read-Only Memory, PROM), an erasable programmable read-only memory (Erasable Programmable Read-Only Memory, EPROM), or the like. In addition, the memory 102 may alternatively be a dual in-line memory module (Dual In-line Memory Module, DIMM for short), that is, a module formed by a dynamic random access memory (DRAM), or may be a solid-state drive (Solid-State Drive, SSD). In actual application, a plurality of memories 102 and different types of memories 102 may be configured in the computing node 10. A quantity and types of the memories 102 are not limited in this embodiment. In addition, the memory 102 may be configured to have a power protection function. The power protection function means that data stored in the memory 102 is not lost when a system is powered off and then powered on again. The memory having the power protection function is referred to as a non-volatile memory.

The network adapter 103 is configured to communicate with the storage node 11. For example, when a total amount of data in the memory 102 reaches a specific threshold, the computing node 10 may send a request to the storage node 11 through the network adapter 103, to perform persistent storage on the data. The network adapter 103 may be a remote direct memory access (remote direct memory access, RDMA) network adapter. In this case, the network adapter 103 may directly read and write a memory of the storage node 11 without using the processor 101.

In addition, the computing node 10 may further include a bus used for communication between components in the computing node 10. In terms of functions, a main function of the computing node 10 in FIG. 1 is a computing service, and a remote memory may be used to implement persistent storage during data storage. Therefore, the computing node 10 has fewer local memories than a conventional server, thereby saving costs and space. However, this does not mean that the computing node 10 cannot have a local memory. In actual implementation, the computing node 10 may alternatively have a small quantity of built-in hard disks or a small quantity of external hard disks.

At a software layer, as shown in FIG. 1, an application program (application for short) 104 may run on the computing node 10. The application 104 is a general term of various applications presented to a user. A client 105 is configured to receive a data access request triggered by the application 104, interact with the storage node 11, and send the data access request to the storage node 11. The client 105 is further configured to receive data from the storage node 11, and forward the data to the application 104. It may be understood that, when the client 105 is a software program, a function of the client 105 is implemented by the processor 101 included in the computing node 10 by running a program in the memory 102. Alternatively, the client 105 may be implemented by a hardware component located inside the computing node 10. Any client 105 in the computing node cluster can access any storage node 11 in the storage node cluster.

For example, in this embodiment of this application, the application 104 may trigger a transaction processing request, and the client 105 may be a coordinator (coordinator) client in a distributed transaction processing system. The coordinator client is configured to: receive a transaction processing request of the application 104, initiate processing of a transaction, interact with the storage node 11 to coordinate execution of the transaction, determine a step of executing the transaction, and determine whether the transaction is finally submitted or terminated. Correspondingly, a computing node deployed with the coordinator client may be referred to as a transaction initiation node.

Any computing node 10 may access any storage node 11 in the storage node cluster over the network. The storage node cluster includes a plurality of storage nodes 11 (FIG. 1 shows three storage nodes 11, but is not limited to three storage nodes 11). Some storage nodes in the plurality of storage nodes 11 are primary nodes of some storage objects, and some storage nodes are backup nodes of some storage objects. In other words, in this embodiment of this application, in the storage node cluster, an object is stored by using a primary copy mechanism. Each storage object has a corresponding primary node and a backup node. A primary node of a storage object is a node that stores a primary copy of the storage object, and a backup node is a node that stores a backup copy of the storage object.

For example, one storage node 11 includes one or more controllers 111, a network adapter 112, and a plurality of hard disks 113. The network adapter 112 is configured to communicate with the computing node 10. The network adapter 112 may be an RDMA network adapter. The hard disk 113 is configured to store data, and may be a magnetic disk or another type of storage medium, for example, a solid-state drive or a shingled magnetic recording hard disk. The controller 111 is configured to write data into the hard disk 113 or read data from the hard disk 113 based on a data read/write request sent by the computing node 10. In a data read/write process, the controller 111 needs to convert an address carried in the data read/write request into an address that can be identified by the hard disk. It can be learned that the controller 111 also has some simple computing functions.

In actual application, the controller 111 may have a plurality of forms. In one case, the controller 111 includes a CPU and a memory. The CPU is configured to perform operations such as address translation and data reading and writing. The memory is configured to temporarily store data to be written into the hard disk 113, or read, from the hard disk 113, data to be sent to the computing node 10. In addition, the memory may further store a program instruction executable by the CPU. For example, in this embodiment of this application, the memory stores a program instruction for implementing a primary node and/or a backup node in which a storage node in a transaction processing system is/is located. Correspondingly, the CPU may execute the program instruction, so that the storage node 11 correspondingly implements a related function of the primary node and/or the backup node in which the storage object in the transaction processing system is located.

In the system architecture shown in FIG. 1, a computing node and a storage node are separated. In addition, the coordinator client in the distributed transaction processing system runs on the computing node, and a function of the primary node or the backup node in which the storage object is located is deployed on the storage node. That is, in the system shown in FIG. 1, the computing node is a transaction initiation node, and a storage object to be accessed by a transaction is located in the storage node.

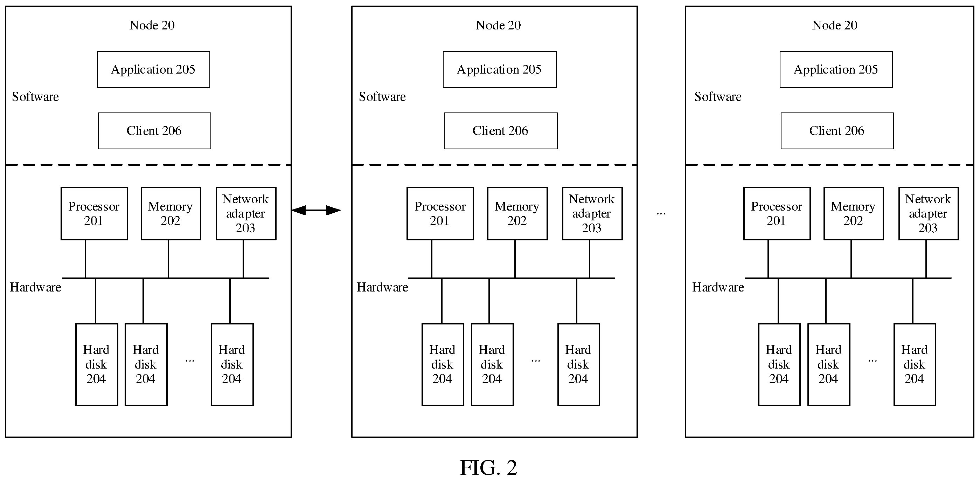

In another possible implementation, one node may be deployed with the coordinator client, and may also be deployed with a program instruction for implementing a processing function of the primary node and/or the backup node in which the storage object is located. In other words, one node may serve as a transaction initiation node, and at the same time, the node may also serve as a primary node of some storage objects, and a backup node of some other storage objects. For example, with reference to FIG. 2, the system includes a plurality of nodes 20 (FIG. 2 shows three nodes 20, but is not limited to three nodes 20), and the plurality of nodes 20 may communicate with each other. The node 20 is a device that has both a computing capability and a storage capability, for example, a server or a desktop computer. For example, an ARM server or an X86 server may serve as the node 20 herein. In addition, in this embodiment of this application, when the nodes 20 provide storage resources to store data, each storage object not only has a primary node, but also has a backup node. That is, data stored persistently in the system is stored by using a primary copy mechanism. A primary node of a storage object is a node that stores a primary copy of the storage object, and a backup node of a storage object is a node that stores a backup copy of the storage object.

At a hardware layer, as shown in FIG. 2, the node 20 includes at least a processor 201, a memory 202, a network adapter 203, and a hard disk 204. The processor 201, the memory 202, the network adapter 203, and the hard disk 204 are connected to each other through a bus.

The processor 201 and the memory 202 are configured to provide a computing resource. Specifically, the processor 201 is a central processing unit (central processing unit, CPU), and is configured to process a data access request from the outside of the node 20 (an application server or another node 20), and is also configured to process a request generated inside the node 20. The data access request may be a write request or a read request.

The memory 202 is an internal memory that directly exchanges data with the processor 201. The memory can read and write data at a high speed at any time, and serves as a temporary data memory of an operating system or another running program. The memory 202 includes at least two types of memories. For example, the memory may be a random access memory or a ROM. For example, the random access memory is a DRAM or an SCM. However, the DRAM and the SCM are merely examples for description in this embodiment. The memory may further include another random access memory, for example, an SRAM. The read-only memory may be, for example, a PROM or an EPROM. In addition, the memory 202 may alternatively be a DIMM, that is, a module formed by a DRAM, or may be an SSD. In actual application, a plurality of memories 202 and different types of memories 202 may be configured in the node 20. A quantity and types of the memories 202 are not limited in this embodiment. In addition, the memory 202 may be configured to have a power protection function. The power protection function means that data stored in the memory 202 is not lost when a system is powered off and then powered on again. The memory having the power protection function is referred to as a non-volatile memory.

The network adapter 203 is configured to communicate with another node 20. For example, in this embodiment of this application, the network adapter 203 may be an RDMA network adapter. In this case, an RDMA network adapter in any node 20 may directly access a memory in another node 20 without using a processor 201 of the node.

The hard disk 204 is configured to provide a storage resource, for example, to store data. The hard disk 204 may be a magnetic disk or another type of storage medium, for example, a solid-state drive or a shingled magnetic recording hard disk.

At a software layer, as shown in FIG. 2, an application program (application for short) 205 and a client program (client for short) 206 are deployed on the node 20. The application 205 may directly trigger a write request or a read request by using the client 206 in the node 20, and the write request or the read request is processed by the node 20, or sent to another node 20 for processing. In this case, that the client 206 sends a data access request to a local node 20 specifically means that the client sends the data access request to the processor.

For example, in this embodiment of this application, the client 206 may be a software client of a distributed transaction processing system. The client 206 may include a coordinator processing module, a primary node processing module, and a backup node processing module. When the application 205 in the node 20 triggers a transaction processing request, the coordinator processing module in the client 206 may receive the transaction processing request, and interacts with a primary node and a backup node in which a storage object to be accessed by the transaction processing request is located, to coordinate execution of the transaction, determine a step of executing the transaction, and determine whether the transaction is finally submitted or terminated. In this case, a function implemented by the node 20 is a function of the transaction initiation node. When the node 20 receives a data access request triggered by another node 20 based on the transaction processing request, the node 20 may process the data access request by using the primary node processing module, and perform a subsequent transaction processing step under scheduling of the another node 20. In this case, a function implemented by the node 20 is a function of a primary node in which a storage object in a transaction is located. If the node 20 receives a backup submission message of the another node 20, the node 20 may process the message by using the backup node processing module, and perform a subsequent transaction processing step under scheduling of the another node 20. In this case, a function implemented by the node 20 is a function of a backup node in which a storage object in a transaction is located.

It can be learned from the foregoing description that, in a distributed transaction processing process, based on different functions implemented by the nodes, the node may be classified into a transaction initiation node, and a primary node and a backup node of a storage object accessed by a transaction. In addition, it should be noted that in this embodiment of this application, one node may be one physical machine.

Currently, a transaction initiation node, and a primary node and a backup node of a storage object usually process a distributed transaction based on a distributed optimistic concurrency control (optimistic concurrency control, OCC) protocol.

In the distributed OCC protocol, a transaction processing process is divided into two phases, namely an execution phase and a submission phase respectively. In the execution phase, the transaction initiation node has a temporary version of the storage object to be accessed by the transaction, and the temporary version is a copy of a latest successfully submitted version of the storage object. In addition, when the transaction includes a write operation, the transaction initiation node may modify a temporary version of a write object, and record a modified version. In the submission phase, the transaction initiation node verifies version values of storage objects by interacting with primary nodes of the storage objects to be accessed, to determine whether an operation performed by the transaction on the storage object conflicts with an operation performed by another transaction on the same storage object. If the verification is successful, that is, no conflict exists, the transaction initiation node interacts with the primary nodes and backup nodes of the storage objects, to complete submission of the transaction. For the write object, the modified version is stored persistently into a corresponding primary node and backup node.

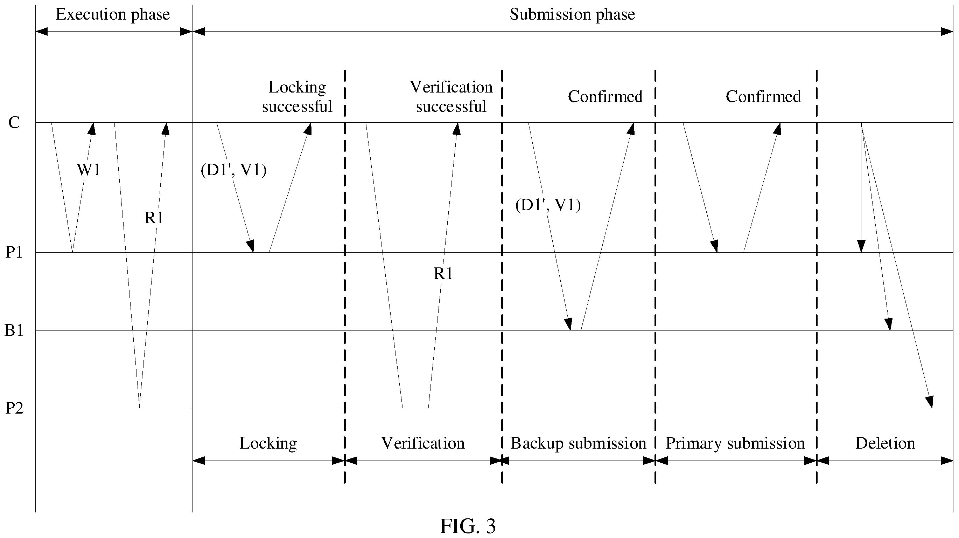

In a related technology, when a to-be-processed first transaction includes both a read operation and a write operation, for example, as shown in FIG. 3, when storage objects for two write operations in the first transaction are W1, and a storage object for one read operation is R1, in the execution phase, a transaction initiation node C first reads W1 from a primary node P1 in which W1 is located, and reads R1 from a primary node P2 in which R1 is located. W1 includes a version value V1, and R1 includes a version value V2. Then, the transaction initiation node C modifies a data item D1 in W1, and records D1' obtained through modification.

In the submission phase, the transaction initiation node C may submit the transaction through the following five steps.

### 1. Locking

In this step, the transaction initiation node C sends a lock message to the primary node P1, where the lock message includes (V1, D1'). The primary node P1 compares V1 with a version value of W1 stored in the primary node P1, and adds a lock to W1 stored in the primary node P1. If V1 is the same as the version value of W1 stored in the primary node P1 and a lock is successfully added to W1, a locking success response is returned to the transaction initiation node C. If V1 is different from the version value of W1 stored in the primary node P1 or a lock fails to be added to W1, a locking failure response is returned to the transaction initiation node.

If the transaction initiation node C receives the locking success response returned by the primary node P1, step 2 is performed. If the locking failure response returned by the primary node P1 is received, the transaction initiation node C aborts a processing procedure of the transaction, and sends an abandon message to the primary node P1, to indicate to unlock an object to which a lock is successfully added.

### 2. Verification

In this step, the transaction initiation node C reads R1 from the primary node P2 again. If a version value in R1 that is read again is the same as the version value V2 in R1 read in the execution phase and a lock is not added to R1 that is read again, step 3 is performed.

If the version value in R1 that is read again is different from the version value V2 in R1 read in the execution phase or a lock is added to R1 that is read again, the transaction initiation node C aborts the processing procedure of the transaction, and sends an abandon message to the primary node P1, to indicate to unlock an object to which a lock is successfully added.

### 3. Backup submission

In this step, the transaction initiation node C sends a backup submission message to a backup node B1 of W1. Content included in the backup submission message is the same as content included in the lock message in the foregoing step 1. After receiving the backup submission message, the backup node B1 may feed back a backup submission success response to the transaction initiation node C.

If the transaction initiation node C receives the backup submission success response sent by the backup node B1, step 4 is performed.

If the transaction initiation node C does not receive the backup submission success response sent by the backup node B1, the transaction initiation node C aborts the processing procedure of the transaction, and sends an abandon message to the primary node P1, to indicate to unlock an object to which a lock is successfully added.

### 4. Primary submission

In this step, the transaction initiation node C sends a primary submission message to the primary node P1. After receiving the primary submission message, the primary node P1 updates the data item in W1 stored in the primary node P1 to D1' carried in the lock message received in step 1, and unlocks W1 stored in the primary node P1. Then, the transaction initiation node C returns a primary submission success response.

If the transaction initiation node C receives the primary submission success response sent by the primary node P1, the transaction initiation node C generates a transaction completion notification, to notify an upper-layer application that execution of the transaction is completed. Then, the transaction initiation node C performs step 5.

### 5. Deletion

In this step, the transaction initiation node C separately sends a deletion message to the primary nodes P1 and P2 and the backup node B1. After receiving the deletion message, the primary nodes delete various messages related to the transaction. After receiving the deletion message, the backup node modifies a corresponding data item of a write object stored in the backup node to a corresponding modified data item carried in the backup submission message, and then deletes various messages related to the transaction.

It can be learned from the foregoing description of the transaction processing process that, currently, in the submission phase, a version value of a read object can be verified only after the write object is successfully locked. This is because if the version value of the read object is verified before the write object is successfully locked, the read object may still be modified in a process of locking the write object. As a result, an operation performed by the transaction on the write object may be incorrect. Therefore, data correctness can be ensured by successfully locking the write object first and then verifying the version value of the read object. In addition, in the foregoing submission phase, data can be submitted to the primary node only after the data is successfully submitted to the backup node, so as to ensure data reliability. However, a sequence between locking of the write object and version value verification of the read object, and a sequence between the backup submission and the primary submission ensure correctness and reliability of data submission, but a long transaction submission delay is caused. This is unacceptable for some delay-sensitive services.

Based on this, an embodiment of this application provides a transaction processing method. Based on information about a write object and information about a read object that are included in a first transaction, a first node reads the write object from a primary node of the write object, and reads the read object from a primary node of the read object. After modifying the data item of the write object, the first node may send a write locking message to the primary node of the write object, and send a read locking message to the primary node of the read object. In this way, the primary node of the write object and the primary node of the read object may add a lock to an object and verify a version value in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the primary node of the read object first returns a read locking success response and the primary node of the write object then returns a write locking success response, that is, even if the version value of the read object is successfully verified before a lock is successfully added to the write object, because the primary node of the read object further successfully adds a read lock to the read object when the version value of the read object is successfully verified, the read object is not tampered with by another transaction before the primary node of the write object successfully adds a write lock to the write object, thereby ensuring correctness of submitted data. It can be learned that in embodiments of this application, a transaction submission delay is reduced while correctness of submitted data is ensured.

The following describes a transaction processing method provided in embodiments of this application.

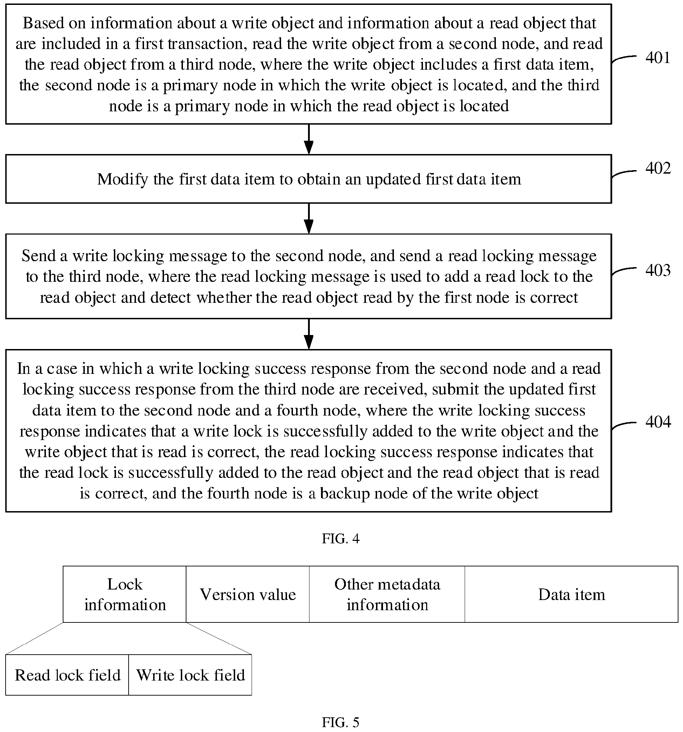

FIG. 4 is a flowchart of a transaction processing method according to an embodiment of this application. The method may be applied to a first node. The first node may be any computing node in the system architecture shown in FIG. 1, or may be any node in the system architecture shown in FIG. 2. In addition, the first node is a node that triggers transaction processing. That is, the first node is a transaction initiation node in a transaction processing process. Refer to FIG. 4. The method includes the following steps.

**Step 401:** Based on information about a write object and information about a read object that are included in a first transaction, read the write object from a second node, and read the read object from a third node, where the write object includes a first data item, the second node is a primary node in which the write object is located, and the third node is a primary node in which the read object is located.

In this embodiment of this application, the information about the write object included in the to-be-processed first transaction may include address information of the write object, and the information about the read object may include address information of the read object. Based on this, the first node may read, based on the address information of the write object, the write object from the primary node in which the write object is located, namely, the second node, and read, based on the address information of the read object, the read object from the primary node in which the read object is located, namely, the third node.

For example, the first node may read, based on the address information of the write object by using an RDMA network adapter, the write object from a storage object stored in the second node, and read, based on the address information of the read object by using the RDMA network adapter, the read object from a storage object stored in the third node.

It should be noted that both the write object and the read object may be referred to as the storage object. The storage object in this embodiment of this application is a data unit stored in a node, for example, may be a data unit stored in a memory of the node. One storage object may include a metadata item and a data item. The metadata item may include a version value and lock information.

The version value indicates a version of the storage object. In a possible implementation, the version value may include two types of version values, namely, an intermediate-state version value and a stable-state version value.

The intermediate-state version value indicates that an updated data item of the storage object is not successfully submitted. That is, the updated data item of the storage object already exists in a primary node of the storage object. However, the updated data item has not been notified to a backup node of the storage object, or the updated data item has been notified to a backup node of the storage object, but the backup node has not confirmed receipt of the updated data item.

The stable-state version value indicates that the updated data item of the storage object is successfully submitted. That is, the primary node has updated the data item of the storage object stored in the primary node based on the updated data item of the storage object, the updated data item has also been notified to all backup nodes of the storage object, and all the backup nodes have confirmed receipt of the updated data item.

In an example, in this embodiment of this application, the intermediate-state version value may be represented by an odd number, and the stable-state version value may be represented by an even number. For any intermediate-state version value, a stable-state version value corresponding to the intermediate-state version value may be equal to the intermediate-state version value plus 1. The intermediate-state version value and the corresponding stable-state version value are version values in a process of modifying the storage object based on a transaction. In addition, for any stable-state version value, the stable-state version value corresponds to a unique next intermediate-state version value, and the next intermediate-state version value of the stable-state version value is equal to the stable-state version value plus 1. In this case, the stable-state version value is a version value obtained after the updated data item of the storage object is successfully submitted based on one transaction. The next intermediate-state version value corresponding to the stable-state version value is a version value obtained when an updated data item of a storage object of a version indicated by the stable-state version value is not successfully submitted in a process of modifying the storage object based on another transaction.

The foregoing is an example of the intermediate-state version value and the stable-state version value provided in this application. Apparently, the intermediate-state version value may alternatively be represented by an even number. In this case, the stable-state version value may be represented by an odd number. Details are not described herein again in this embodiment of this application.

In another possible implementation, the version value may alternatively make no distinction between the intermediate-state version value and the stable-state version value. In this case, each time an updated data item is submitted based on a transaction, 1 is added to a current version value of the storage object. However, the version value of the storage object does not change until submission is completed.

The lock information may include a read lock field and a write lock field. The read lock field is used to implement adding a read lock to the storage object, and the write lock field is used to implement adding a write lock to the storage object. For example, when a value of the write lock field is 1, it indicates that the write lock is added to the storage object currently. When the value of the write lock field is 0, it indicates that no write lock is added to the storage object currently. For another example, when a value of the read lock field is 0, it indicates that no read lock is added to the storage object currently. When the value of the read lock field is n, it indicates a quantity of visitors that currently own the read lock of the storage object, that is, indicates how many visitors read the storage object in a shared manner. Herein, n is a positive integer greater than 0. In addition, in this embodiment of this application, the foregoing visitor may be a transaction.

It should be noted that in this embodiment of this application, the read lock cannot be added again when the write lock is added to the storage object, or the write lock cannot be added again after the read lock is added to the storage object. For example, in the foregoing example of the values of the write lock field and the read lock field, when the value of the write lock field of the storage object is 1, the value of the read lock field is 0, and when the value of the read lock field is n, the value of the write lock field is 0. That is, a case in which the read lock field is n and the write lock field is 1 does not occur.

In addition to the version value and lock information, the metadata item of the storage object may further include other information describing the data item, for example, may include length information of the data item. This is not limited in this embodiment of this application.

FIG. 5 is a diagram of a data structure of a storage object according to an embodiment of this application. As shown in FIG. 5, the storage object includes the foregoing lock information. The lock information includes a read lock field and a write lock field. The lock information is followed by a version value of the storage object. The version value of the storage object is followed by other metadata information. The other metadata information is followed by a data item of the storage object.

**Step 402:** Modify the first data item to obtain an updated first data item.

After reading the write object and the read object, the first node modifies the first data item included in the write object that is read, to obtain the updated first data item. Then, the first node may cache the updated first data item locally.

**Step 403:** Send a write locking message to the second node, and send a read locking message to the third node, where the read locking message is used to add a read lock to the read object and detect whether the read object read by the first node is correct.

After modifying the first data item to obtain the updated first data item, the first node may send the write locking message to the second node, and send the read locking message to the third node. This embodiment of this application does not limit a time sequence of sending the write locking message and the read locking message by the first node. That is, the first node may send the write locking message and the read locking message in no particular sequence.

For example, the first node may send the read locking message to the third node while sending the write locking message to the second node. Alternatively, the first node may first send the write locking message to the second node, and then send the read locking message to the third node when a write locking success response returned by the second node based on the write locking message is not received. Alternatively, the first node may first send the read locking message to the third node, and then send the write locking message to the second node when a read locking success response returned by the third node based on the read locking message is not received.

The write locking message indicates the second node to add a write lock to the write object and detect whether the write object read by the first node is correct. For example, the write locking message includes a version value of the write object, and the version value of the write object is a version value in a metadata item of the write object read by the first node from the second node. Based on this, detecting whether the write object read by the first node is correct may be detecting whether the version value of the write object read by the first node meets a verification condition. In addition, the write locking message may further include the updated first data item.

Optionally, when there are a plurality of write objects, and the plurality of write objects are located in different second nodes, write locking messages sent by the first node to the second nodes may be the same or may be different. When the write locking messages sent to the second nodes are the same, the write locking message includes a version value of each write object and an updated first data item of each write object. When the write locking messages sent to the second nodes are different, a write locking message sent to any second node includes an updated first data item and a version value of a write object that is located on the second node and that is read by the first node in the plurality of write objects.

The read locking message indicates the third node to add the read lock to the read object and detect whether the read object read by the first node is correct. For example, the read locking message includes a version value of the read object, and the version value of the read object is a version value in a metadata item of the read object read by the first node from the third node. Based on this, detecting whether the read object read by the first node is correct may be detecting whether the version value of the read object read by the first node meets a verification condition.

It should be noted that in this embodiment of this application, in addition to the foregoing information, the write locking message and the read locking message may further include an identifier and a message type of the first transaction. The identifier of the first transaction indicates that the write locking message and the read locking message are messages that are sent by the first node and that are related to the first transaction. The message type indicates which message a corresponding message is. Certainly, in subsequent steps, various messages sent by the first node to the second node, the third node, and a fourth node may also include the identifier and the message type of the first transaction. In addition, when a corresponding message indicates a node to perform an operation on a storage object, the message may further include an object identifier of the object to be operated. For example, the write locking message may include an object identifier of a write object, so that the second node determines, based on the object identifier of the write object, a write object to be operated currently. Similarly, the read locking message may include an object identifier of a read object. Details are not described again in this embodiment of this application.

After receiving the write locking message, the second node caches the write locking message, adds a write lock to the write object based on the write locking message, and detects whether the write object read by the first node is correct.

The second node may search for, based on the object identifier of the write object in the write locking message, the write object stored in the second node, and then detect, based on lock information of the found write object, whether the write lock or the read lock has been added to the write object. If the lock information indicates that the write lock or the read lock has been added to the write object, the second node cannot add the write lock to the write object again at this time. In this case, it is determined that the write lock fails to be added to the write object. If the lock information indicates that neither the write lock nor the read lock is added to the write object, the second node may add the write lock to the write object by modifying the lock information.

For example, as described above, the lock information of the write object may include a read lock field and a write lock field. The second node may detect whether values of the read lock field and the write lock field are 0. If a value of the read lock field is not 0, it is determined that the read lock has been added to the write object; or if a value of the write lock field is not 0, it is determined that the write lock has been added to the write object. In this case, it is determined that the write lock fails to be added to the write object. If the values of the read lock field and the write lock field are both 0, the second node may modify the value of the write lock field to a non-zero value, for example, to 1, to add the write lock to the write object.

In addition, the second node may further obtain a version value of the write object carried in the write locking message, and obtain a current version value of the write object stored in the second node. Based on the current version value of the write object stored in the second node, it is determined whether the version value that is of the write object read by the first node and that is carried in the write locking message meets the verification condition.

In a first implementation, if the version value of the storage object includes two types, namely, an intermediate-state version value and a stable-state version value, when the version value the write object read by the first node is the intermediate-state version value, the second node may determine whether the current version value of the write object stored in the second node is a stable-state version value corresponding to the version value of the write object read by the first node. If the current version value of the write object stored in the second node is the stable-state version value corresponding to the version value read by the first node, it indicates that the write object read by the first node is a write object that is of a stable version and that is currently stored in the second node. In this case, the second node may determine that the version value of the write object read by the first node meets the verification condition. That is, the write object read by the first node is correct.

If the current version value of the write object stored in the second node is not the stable-state version value corresponding to the version value of the write object read by the first node, it indicates that the write object currently stored in the second node is changed relative to the write object read by the first node, or the write object currently stored in the second node is unchanged relative to the write object read by the first node, but the write object currently stored in the second node is in a state of being modified by another transaction, that is, the write object currently stored in the second node has not entered a stable state. In this case, the second node may determine that the version value of the write object read by the first node does not meet the verification condition. That is, the write object read by the first node is incorrect.

For example, assuming that the version value of the write object read by the first node is 11, the stable-state version value corresponding to the version value of the write object is 12. Therefore, if the current version value of the write object stored in the second node is 12, it may be determined that the write object read by the first node is correct. If the current version value of the write object stored in the second node is 13, it indicates that the write object stored in the second node has been modified by another transaction. In this case, the write object stored in the second node is different from the write object read by the first node. In this case, it is determined that the write object read by the first node is incorrect. If the current version value of the write object stored in the second node is 11, it indicates that the write object stored in the second node is still in the state of being modified by the another transaction, that is, modification of the write object by the another transaction is not successfully submitted, and the write object has not entered the stable state. In this case, the second node cannot accept the modification of the write object by the first node. Therefore, the second node may determine that the write object read by the first node is incorrect.

When the version value of the write object read by the first node is the stable-state version value, the second node may determine whether the current version value of the write object stored in the second node is the same as the version value read by the first node. If the current version value of the write object stored in the second node is the same as the version value read by the first node, it indicates that the write object read by the first node is the write object currently stored in the second node, and the write object is not currently modified by another transaction. In this case, the second node may determine that the version value of the write object meets the verification condition. That is, the write object read by the first node is correct.

If the current version value of the write object stored in the second node is not the version value read by the first node, it indicates that the write object read by the first node is different from the write object currently stored in the second node. In this case, the second node may determine that the version value of the write object read by the first node does not meet the verification condition. That is, the write object read by the first node is incorrect.

For example, assuming that the version value of the write object read by the first node is 12, if the current version value of the write object stored in the second node is also 12, it may be determined that the write object read by the first node is correct. If the current version value of the write object stored in the second node is 13, it may be determined that the write object read by the first node is incorrect.

In a second implementation, if the version value of the storage object makes no distinction between the intermediate-state version value and the stable-state version value, the second node may determine whether the version value that is of the write object read by the first node and that is carried in the write locking message is the same as the current version value of the write object stored in the second node. If the version values are the same, it indicates that the write object read by the first node is the same as the write object stored in the second node. In this case, the second node may determine that the version value of the write object read by the first node meets the verification condition. That is, the write object read by the first node is correct.

If the version value that is of the write object read by the first node and that is carried in the write locking message is different from the current version value of the write object stored in the second node, the second node may determine that the version value of the write object read by the first node does not meet the verification condition. That is, the write object read by the first node is incorrect.

If the second node successfully adds the write lock to the write object by using the foregoing method and determines that the write object read by the first node is correct, the second node may return a write locking success response to the first node. If the second node fails to add the write lock to the write object by using the foregoing method or determines that the write object read by the first node is incorrect, the second node may return a write locking failure response to the first node.

After receiving the read locking message, the third node may cache the read locking message, add the read lock to the read object based on the read locking message, and detect whether the read object read by the first node is correct.

The third node may determine, based on lock information of a read object stored in the third node, whether the read lock or the write lock is added to the read object. If the write lock has been added to the read object, it is determined that the read lock fails to be added to the read object. If the write lock has not been added to the read object, the third node may add the read lock to the read object again regardless of whether the read lock has been added to the read object.

For an implementation of determining whether the read lock or the write lock is added to the read object, refer to related implementations described above. Details are not described herein again in this embodiment of this application. In addition, the third node may also add the read lock to the read object by modifying the lock information. For example, the third node may add 1 to a value of a read lock field in the lock information of the read object stored in the third node, to add the read lock to the read object again.

In addition, the third node may further verify the version value of the read object with reference to the foregoing manner in which the second node verifies the version value of the write object, to detect whether the read object read by the first node is correct. Details are not described herein again in this embodiment of this application.

If the third node successfully adds the read lock to the read object and determines that the read object read by the first node is correct, the third node may return a read locking success response to the first node. If the third node fails to add the read lock to the read object or determines that the read object read by the first node is incorrect, the third node may return a read locking failure response to the first node.

When the first node receives the write locking success response from the second node and the read locking success response from the third node, the following step 404 may be performed. Optionally, if the first node receives the write locking failure response fed back by the second node, or receives the read locking failure response sent by the third node, or receives both the write locking failure response and the read locking failure response, the first node may send a procedure abort message to the second node and the third node. The procedure abort message indicates to abort processing of the first transaction, and the procedure abort message further indicates the second node and the third node to unlock an object to which a lock is successfully added.

It should be noted that, as can be learned from the foregoing description, the write locking failure response may be returned by the second node in a case in which the write lock is successfully added to the write object but version value verification fails. The read locking failure response may be returned by the third node in a case in which the read lock is successfully added to the read object but version value verification fails. On this basis, after the second node and the third node receive the procedure abort message, if the second node returns the write locking success response or the second node returns the write locking failure response in a case in which the write lock is successfully added to the write object but version value verification fails, the second node may release the write lock added to the write object. Similarly, if the third node returns the read locking success response or the third node returns the read locking failure response in a case in which the read lock is successfully added to the read object but version value verification fails, the third node may release the read lock added to the read object based on the first transaction.

For example, the second node may change a value of the write lock field in the lock information of the stored write object to 0, to unlock the write object. The third node may subtract 1 from the value of the read lock field in the lock information of the stored read object, to release the read lock that is of the read object and that is owned by the first transaction.

**Step 404:** In a case in which the write locking success response from the second node and the read locking success response from the third node are received, submit the updated first data item to the second node and the fourth node, where the write locking success response indicates that the write lock is successfully added to the write object and the write object that is read is correct, the read locking success response indicates that the read lock is successfully added to the read object and the read object that is read is correct, and the fourth node is a backup node of the write object.

When the first node receives the write locking success response from the second node and the read locking success response from the third node, it indicates that both the write object and the read object that are read by the first node are correct, and locks are successfully added to both the write object and the read object. In this case, the first node may submit the updated first data item to the primary node and the backup node of the write object, namely, the second node and the fourth node.

In a first implementation, if the version value of the storage object is implemented by using two version values, namely, a stable-state version value and an intermediate-state version value, the first node may send a primary submission message to the second node, and send a backup submission message to the fourth node, where the backup submission message includes the updated first data item. In a case in which a primary submission success response from the second node and a backup submission success response from the fourth node are received, it is determined that the updated first data item is successfully submitted. The primary submission success response is sent by the second node after updating a data item and a first version value of the stored write object based on the primary submission message and the updated first data item. An updated write object includes a second version value. The second version value is a next intermediate-state version value of the first version value. The backup submission success response is sent by the fourth node after the backup submission message is received.

In this embodiment of this application, the first node may send the primary submission message and the backup submission message in no particular time sequence. For example, the first node may send the backup submission message to the fourth node while sending the primary submission message to the second node. Alternatively, the first node sends the primary submission message to the second node when the backup submission success response is not received after the backup submission message is sent to the fourth node. Alternatively, the first node may send the backup submission message to the fourth node when the primary submission success response is not received after the primary submission message is sent to the second node.

After receiving the primary submission message, the second node may cache the primary submission message. The second node obtains the updated first data item based on the primary submission message, and then updates, based on the updated first data item, a data item of the write object stored in the second node, and updates the version value of the write object stored in the second node.

For example, the primary submission message may include the updated first data item. In this case, the second node may obtain the updated first data item from the primary submission message. Alternatively, the foregoing write locking message includes the updated first data item, and the primary submission message does not include the updated first data item. In this case, the second node may obtain an identifier of the first transaction in the primary submission message, and obtain, from a write locking message cached in the second node based on the identifier of the first transaction, a write locking message that includes the identifier of the first transaction. Then, the updated first data item is obtained from the obtained write locking message.

After obtaining the updated first data item, the second node may replace the data item of the write object stored in the second node with the updated first data item, and modify the first version value of the write object stored in the second node to the second version value. Then, the second node may return the primary submission success response to the first node, to notify the first node that an updated data item that is of the write object and that is submitted to the primary node has been updated.

It should be noted that, as can be learned from a process in which the second node verifies, based on the intermediate-state version value and the stable-state version value, the version value of the write object read by the first node in step 403, the first version value of the write object is the stable-state version value. Based on this, after the second node replaces the data item of the stored write object with the updated first data item, because the write object is modified and it is not determined whether the backup node of the write object receives the updated first data item, the second node may modify the first version value to a corresponding next intermediate-state version value, namely, the second version value, to represent that the write object is being modified. For example, the second node may add 1 to the first version value, to obtain the second version value.

After receiving the backup submission message, the fourth node caches the backup submission message. The backup submission message includes the updated first data item, and the object identifier and the version value of the write object, so that the fourth node subsequently updates the data item and the version value of the stored write object based on the updated first data item, and the object identifier and the version value of the write object that are in the backup submission message. After caching the backup submission message, the fourth node may send the backup submission success response to the first node, to notify the first node that the fourth node has received the backup submission message.

In this embodiment of this application, the second node may identify a state of the write object by switching between the two version values, namely, the stable-state version value and the intermediate-state version value. Therefore, even if the first node sends the primary submission message before receiving the backup submission success response, the second node may also switch the version value of the write object stored in the second node to the intermediate-state version value, to indicate that the write object is in a modification process. In this way, for another transaction that needs to modify the write object, the version value of the write object read by a corresponding transaction can be verified based on the intermediate-state version value by using the method described above, thereby ensuring correctness of data. In this way, through switching between the two version values, a write conflict in a transaction for a storage object is avoided, and correctness of data read by the transaction is ensured. In addition, sending of the primary submission message can be independent of receiving of the backup submission success response. In this way, the primary submission message and the backup submission message may be executed in a very short time difference or even in parallel, thereby shortening a transaction processing time and improving transaction processing efficiency.

In a second implementation, after receiving the write locking success response and the read locking success response, the first node may first send the backup submission message to the fourth node. After receiving the backup submission success response from the fourth node, the first node sends the primary submission message to the second node. After receiving the primary submission success response returned by the second node, it is determined that the updated first data item is successfully submitted.

In other words, in this embodiment of this application, the first node may first submit the updated first data item to the backup node of the write object, and then submit the updated first data item to the primary node after successfully submitting the updated first data item to the backup node. In this case, the version value of the storage object may be implemented by using the intermediate-state version value and the stable-state version value, or make no distinction between the intermediate-state version value and the stable-state version value.

If the version value of the storage object is implemented by using the intermediate-state version value and the stable-state version value, for an operation performed after the second node receives the primary submission message, refer to the foregoing described implementations.

If the version value of the storage object makes no distinction between the intermediate-state version value and the stable-state version value, after receiving the primary submission message and updating the data item of the stored write object based on the primary submission message, the second node may add 1 to the first version value of the stored write object, to obtain the second version value. Because the first node sends the primary submission message in a case of receiving the backup submission success response, after the second node updates the data item and the version value of the stored write object, the second node can determine that the updated first data item has been submitted. That is, submission is successful. In this case, the second node may release the write lock of the stored write object, and then return the primary submission success response to the first node.

In addition, for an operation performed after the fourth node receives the backup submission message, refer to the foregoing described implementations. Details are not described herein again in this embodiment of this application.

Optionally, after receiving the primary submission message, if the second node fails to update the data item and the version value of the stored write object, or the second node does not receive the primary submission message, the second node does not return the primary submission success response to the first node. Similarly, if the fourth node does not receive the backup submission message or fails to cache the backup submission message, the fourth node does not return the backup submission success response to the first node. On this basis, if the first node does not receive the primary submission success response from the second node, or does not receive the backup submission success response from the fourth node, or neither the primary submission success response nor the backup submission success response is received, the first node may send a procedure abort message to the second node, the third node, and the fourth node, to notify each node to abort processing of the first transaction, and indicate the second node and the third node to unlock an object to which a lock is successfully added.

It can be learned from the foregoing descriptions that the second node adds the write lock to the write object, and the third node adds the read lock to the read object. Therefore, if the first node fails to receive the primary submission success response from the second node and/or the backup submission success response from the fourth node, that is, it is determined that the updated first data item fails to be submitted, the first node may notify the second node to release the write lock added to the write object, and notify the third node to release the read lock added to the read object based on the first transaction. For an implementation of releasing the write lock of the write object and releasing the read lock that is added to the read object based on the first transaction, refer to the foregoing described related implementations. Details are not described herein again in this embodiment of this application.

Optionally, in some possible implementations, when the first node submits the updated first data item to the second node and the fourth node, or after the first node submits the updated first data item to the second node and the fourth node, the first node may further send a read lock release message to the third node, to indicate the third node to release the read lock of the read object.

For example, the first node may send the read lock release message to the third node while sending the primary submission message and the backup submission message. Alternatively, the first node may send the read lock release message to the third node immediately after sending the primary submission message and the backup submission message. Alternatively, the first node may send the read lock release message to the third node after receiving the primary submission success response and the backup submission success response, that is, after the updated first data item is successfully submitted.

After receiving the read lock release message, the third node may release, based on the read lock release message, the read lock that is added to the read object based on the first transaction.

After the first node determines that the updated first data item is successfully submitted, the first node may further generate a transaction completion notification, and send the transaction completion notification to an upper-layer application, to notify the upper-layer application that processing of the first transaction is completed.

Optionally, if the version value of the storage object in this embodiment of this application includes two types, namely, an intermediate-state version value and a stable-state version value, after successfully submitting the updated first data item, for example, after generating the transaction completion notification, the first node may further send a write lock release message to the second node. The write lock release message indicates the second node to update the second version value to a third version value, and release a write lock of the updated write object. The third version value is a stable-state version value corresponding to the second version value.

It can be learned from the foregoing descriptions that, in a case in which the version value of the storage object includes the intermediate-state version value and the stable-state version value, after updating the data item of the write object based on the primary submission message, the second node further updates the first version value to the second version value. In this case, the second version value is the intermediate-state version value. On this basis, after determining that the updated first data item is successfully submitted to the second node and the fourth node, the first node may notify the second node to update the second version value to a corresponding stable-state version value, that is, the third version value. In this way, the write object currently stored in the second node is identified as a write object including the data item that has been successfully submitted. For example, the second node may add 1 to the second version value, to obtain the third version value.

Optionally, after the updated first data item is successfully submitted, the first node may further send a first deletion message to the second node, where the first deletion message indicates the second node to delete the write locking message and the primary submission message; and send a second deletion message to the fourth node, where the second deletion message indicates the fourth node to update the data item and the first version value of the stored write object based on the backup submission message and delete the backup submission message.

After sending the write lock release message, the first node may send the first deletion message to the second node, and send the second deletion message to the fourth node. Optionally, if the version value of the storage object makes no distinction between the intermediate-state version value and the stable-state version value, because the second node may release the write lock of the write object after updating the data item and the version value of the write object stored in the second node, the first node does not need to send the write lock release message to the second node. In this case, the first node may send the first deletion message to the second node immediately after successfully submitting the updated first data item or generating the transaction completion notification, and send the second deletion message to the fourth node.

After receiving the first deletion message, the second node searches for, based on an identifier that is of the first transaction and that is carried in the first deletion message, a message that is cached in the second node and that includes the identifier of the first transaction. Then, the second node deletes the found message. The found message includes the write locking message and the primary submission message. Optionally, the found message may further include the write lock release message.

After receiving the second deletion message, the fourth node searches for, based on an identifier that is of the first transaction and that is carried in the second deletion message, a cached backup submission message that includes the identifier of the first transaction. The fourth node updates the data item and the first version value of the stored write object based on the backup submission message, and deletes the backup submission message.

It should be noted that the fourth node may further store a backup submission message sent after another transaction except the first transaction modifies the write object, that is, the fourth node may store a backup submission message submitted after different transactions modify a same write object. For ease of description, in the following, a backup submission message corresponding to the first transaction, namely, the backup submission message including the identifier of the first transaction, is referred to as a target backup submission message, and a backup submission message corresponding to another transaction is referred to as another backup submission message. It can be learned from the foregoing descriptions that the target backup submission message includes the updated first data item and the version value of the write object. Based on this, after finding the target backup submission message, the fourth node obtains, based on the object identifier that is of the write object and that is included in the target backup submission message, another backup submission message that also includes the object identifier of the write object. Then, the fourth node may compare a version value carried in the target backup submission message with a version value carried in the obtained another backup submission message. If the version value in the target backup submission message is greater than the version value in the another backup submission message, the fourth node updates the stored write object based on the updated first data item and the version value of the write object that are in the target backup submission message.

For example, each backup submission message may carry a version value of a write object read by a corresponding transaction. In this case, when updating the stored write object based on the updated first data item and the version value of the write object that are in the target backup submission message, the fourth node may replace the data item of the stored write object with the updated first data item, and update the version value of the stored write object based on the version value in the target backup submission message.

If the version value of the storage object includes the intermediate-state version value and the stable-state version value, the fourth node may update the first version value of the stored write object to the third version value based on the version value in the target backup submission message.

For example, when the version value in the target backup submission message is the intermediate-state version value, the fourth node may add 3 to the version value, to obtain the third version value. When the version value is the stable-state version value, the fourth node may add 2 to the version value, to obtain the third version value.

If the version value of the storage object makes no distinction between the intermediate-state version value and the stable-state version value, the fourth node may update the first version value of the stored write object to the second version value based on the version value in the target backup submission message. For example, the fourth node may add 1 to the version value to obtain the second version value.

Optionally, each backup submission message may also carry a current version value of the write object that is obtained by a transaction initiation node of a corresponding transaction through calculation based on a version value of the write object that is read. In this case, when updating the stored write object based on the updated first data item and the version value of the write object that are in the target backup submission message, the fourth node may replace the data item of the stored write object with the updated first data item, and directly replace the version value of the stored write object with the version value carried in the target backup submission message.

After the fourth node updates the data item and the version value of the write object, the fourth node may delete the cached backup submission message. In addition, the fourth node may further delete another message that includes the identifier of the first transaction.

Optionally, the first node may further send a third deletion message to the third node while sending the deletion message to the second node and the fourth node, to indicate the third node to delete a cached message related to the first transaction.

For example, the third node may search for, based on an identifier that is of the first transaction and that is included in the third deletion message, a cached message including the identifier of the first transaction, and delete the found message. The found deletion message includes the foregoing read locking message, and may further include the read lock release message.

In this embodiment of this application, the first node reads the write object from the second node, and after reading the read object from the third node, modifies the data item of the write object that is read. Then, the write locking message may be sent to the second node, and the read locking message may be sent to the third node. In this way, the second node and the third node may add locks to objects and verify version values in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the third node first returns the read locking success response and the second node then returns the write locking success response, that is, even if the third node successfully verifies the version value of the read object before the second node successfully adds the lock to the write object, because the third node further successfully adds the read lock to the read object when the version value of the read object is successfully verified, the read object is not tampered with by another transaction before the second node successfully adds the write lock to the write object, thereby ensuring correctness of submitted data. It can be learned that in embodiments of this application, transaction processing duration is shortened while correctness of submitted data is ensured.

In addition, in this embodiment of this application, the second node may identify a state of the write object by switching between the two version values, namely, the stable-state version value and the intermediate-state version value. Therefore, even if the first node sends the primary submission message before receiving the backup submission success response, the second node may also switch the version value of the write object to the intermediate-state version value, to indicate that the write object is in a modification process. In this way, for another transaction that needs to modify the write object, the version value of the write object read by the second node can be verified based on the intermediate-state version value, thereby ensuring correctness of data. In this way, through switching between the two version values, a write conflict in a transaction for a storage object is avoided, and correctness of data read by the transaction is ensured. In addition, sending of the primary submission message can be independent of receiving of the backup submission success response. In this way, the primary submission message and the backup submission message may be executed in a very short time difference or even in parallel, thereby shortening a transaction processing time and improving transaction processing efficiency.

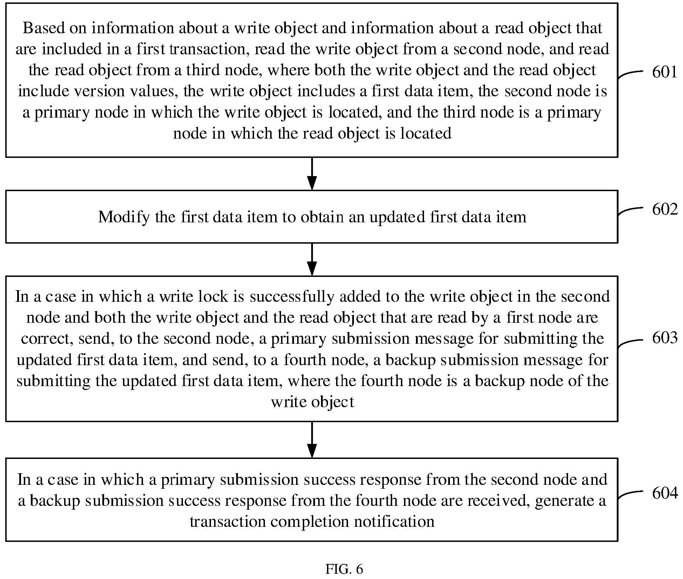

FIG. 6 is a flowchart of another transaction processing method according to an embodiment of this application. The method may be applied to a first node. The first node may be any computing node in the system architecture shown in FIG. 1, or may be any node in the system architecture shown in FIG. 2. In addition, the first node is a node that triggers transaction processing. That is, the first node is a transaction initiation node in a transaction processing process. Refer to FIG. 6. The method includes the following steps.

**Step 601:** Based on information about a write object and information about a read object that are included in a first transaction, read the write object from a second node, and read the read object from a third node, where both the write object and the read object include version values, the write object includes a first data item, the second node is a primary node in which the write object is located, and the third node is a primary node in which the read object is located.

For an implementation of this step, refer to the implementation of step 401. As described in step 401, a storage object may include a metadata item and a data item. The metadata item may include a version value and lock information.

In this embodiment of this application, a version value of a storage object includes an intermediate-state version value and a stable-state version value. For related descriptions of the intermediate-state version value and the stable-state version value, refer to the foregoing descriptions. Details are not described herein again in this embodiment of this application.

In addition, the lock information may be implemented in the manner of step 401. That is, the metadata item includes a read lock field for implementing adding a read lock to the storage object and a write lock field for implementing adding a write lock to the storage object.

Optionally, a difference from step 401 lies in that the lock information may include only one write lock field in this embodiment of this application. In this case, a write lock may be added to the storage object by using the write lock field, but the read lock cannot be added to the storage object. In this case, the write lock added to the storage object may also be referred to as an exclusive lock. In other words, for any storage object, in a case in which a write lock is not added to the storage object, a plurality of visitors may read the storage object in a shared manner.

**Step 602:** Modify the first data item to obtain an updated first data item.

For an implementation of this step, refer to the implementation of step 602. Details are not described herein again in this embodiment of this application.

**Step 603:** In a case in which a write lock is successfully added to the write object in the second node and both the write object and the read object that are read by the first node are correct, send, to the second node, a primary submission message for submitting the updated first data item, and send, to a fourth node, a backup submission message for submitting the updated first data item, where the fourth node is a backup node of the write object.

In this embodiment of this application, after the first node modifies the first data item included in the write object, if the lock information of the storage object includes the write lock field and the read lock field, the first node may send a write locking message to the second node with reference to the manner described in step 403, and send the write locking message to the third node. Correspondingly, the second node may add a write lock to the write object stored in the second node with reference to the manner described in step 403, and the third node may add a read lock to the read object stored in the third node with reference to the manner described in step 403. In addition, with reference to the first implementation described in step 403, the second node and the third node may further verify the version values of the write object and the read object that are read by the first node. In this case, after receiving a write locking success response from the second node and a read locking success response, the first node determines that the write lock is successfully added to the write object in the second node, the read lock is successfully added to the read object in the third node, and the write object and the read object that are read by the first node are correct.

Optionally, in another possible implementation, if the lock information of the storage object includes the write lock field but does not include the read lock field, the first node may first send the write locking message to the second node after modifying the first data item, and after receiving the write locking success response returned by the second node, verify the version value of the read object that is read. If the version value of the read object is successfully verified, the first node determines that the write lock is successfully added to the write object in the second node and both the write object and the read object that are read by the first node are correct.

For example, after receiving the write locking message, the second node searches for, based on an object identifier that is of the write object and that is carried in the write locking message, the write object stored in the second node, and then detects, based on lock information of the found write object, whether the write lock has been added to the write object. If the lock information indicates that the write lock has been added to the write object, the second node cannot add the write lock to the write object again at this time. In this case, it is determined that the write lock fails to be added to the write object. If the lock information indicates that the write lock is not added to the write object, the second node may add the write lock to the write object by modifying the lock information.

If a value of the write lock field of the write object is not 0, it is determined that the write lock has been added to the write object. If a value of the write lock field of the write object is 0, it is determined that the write lock has not been added to the write object. In this case, the second node may modify the value of the write lock field to a value that is not 0, to add the write lock to the write object. For example, the value of the write lock field is modified to 1.

In addition, with reference to the first manner in step 401, the second node may further verify the version value that is of the write object read by the first node and that is carried in the write locking message.

If the second node successfully adds the write lock to the write object, and the version value of the write object read by the first node is successfully verified, the second node returns the write locking success response to the first node. If the second node fails to add the write lock to the write object and/or the version value of the write object read by the first node fails to be verified, the second node returns a write locking failure response to the first node.

When receiving the write locking success response, the first node may determine that the write lock is successfully added to the write object. In this case, the first node may send a verification message to the third node, where the verification message carries the version value of the read object read by the first node. After receiving the verification message, the third node verifies, with reference to the first manner in the foregoing step 403, the version value of the read object read by the first node. After the version value of the read object read by the first node is successfully verified, the third node may return a verification success response to the first node. When the version value of the read object read by the first node fails to be verified, the third node returns a read verification failure response to the first node. After receiving the verification success response, the first node determines that the read object read by the first node is correct. After receiving the read verification failure response, the first node determines that the read object read by the first node is incorrect.

Optionally, in a possible implementation, after the first node determines that the write lock is successfully added to the write object, the first node may read the read object from the third node again. Then, with reference to the first manner in the foregoing step 403, the first node may use a version value in the read object that is read again as a current version value, and verify, based on the current version value, a version value of the read object that is read for the first time. If the verification is successful, the first node determines that the read object read by the first node is correct. If the verification fails, the first node determines that the read object read by the first node is incorrect.

After the first node successfully adds the write lock to the write object in the foregoing manner and determines that the write object and the read object that are read by the first node are correct, the first node may send the primary submission message to the second node and send the backup submission message to the fourth node with reference to the content described in the first implementation of step 404. In other words, in this embodiment of this application, the first node sends the primary submission message and the backup submission message in no particular time sequence. This implementation process is not described again in this embodiment of this application.

Optionally, if the first node determines, in the foregoing manner, that the write lock fails to be added to the write object, or determines that the write object and/or the read object that are/is read by the first node is incorrect, the first node may send a procedure abort message to the second node and the third node. The procedure abort message indicates the second node and the third node to abort processing of the first transaction. In addition, if the second node successfully adds the write lock to the write object based on the first transaction in the foregoing procedure, the procedure abort message further indicates the second node to unlock a write object to which a lock is successfully added. If the third node successfully adds the read lock to the read object based on the first transaction in the foregoing procedure, the procedure abort message further indicates the third node to release the read lock added to the read object based on the first transaction.

Optionally, if the lock information of the storage object includes the read lock field, when the first node submits the updated first data item to the second node and the fourth node, or after the first node submits the updated first data item to the second node and the fourth node, the first node may further send a read lock release message to the third node, to indicate the third node to release the read lock of the read object. For a related implementation, refer to the implementation of releasing the read lock in step 404.

**Step 604:** In a case in which a primary submission success response from the second node and a backup submission success response from the fourth node are received, generate a transaction completion notification.

After receiving the primary submission success response from the second node and the backup submission success response from the fourth node, the first node may determine that the updated first data item is successfully submitted. In this case, the first node may generate the transaction completion notification, and send the transaction completion notification to an upper-layer application, to notify the upper-layer application that processing of the first transaction is completed.

After generating the transaction completion notification, the first node may further send a write lock release message to the second node. The write lock release message indicates the second node to update an intermediate-state version value of the currently stored write object, namely, a second version value, to a third version value, and release a write lock of the updated write object. The third version value is a stable-state version value corresponding to the second version value. For an implementation of updating the version value, refer to the related implementation in step 405. Details are not described herein again in this embodiment of this application.

After the write lock release message is sent, the first node may further send a first deletion message to the second node, where the first deletion message indicates the second node to delete the write locking message and the primary submission message; and send a second deletion message to the fourth node, where the second deletion message indicates the fourth node to update the data item and the first version value of the stored write object based on the backup submission message and delete the backup submission message.

For processing manners after the second node and the fourth node receive the deletion message, refer to the related implementation in step 405. Details are not described herein again in this embodiment of this application.

Optionally, the first node may further send a third deletion message to the third node while sending the deletion message to the second node and the fourth node, to indicate the third node to delete a cached message related to the first transaction. For a related implementation, refer to step 405.

In this embodiment of this application, a version value of a storage object may include a stable-state version value and an intermediate-state version value. The intermediate-state version value indicates that an updated data item of the storage object is not successfully submitted, and the stable-state version value indicates that an updated data item of the storage object is successfully submitted. On this basis, switching between the two version values can identify a state of the write object. Therefore, even if the first node sends the primary submission message before receiving the backup submission success response, the primary node of the write object, namely, the second node, may also switch the version value of the write object to the intermediate-state version value, to indicate that the write object is in a modification process. In this way, for another transaction that needs to modify the write object, the version value of the write object read by the second node can be verified based on the intermediate-state version value, thereby ensuring correctness of data. In this way, through switching between the two version values, a write conflict in a transaction for a storage object is avoided, and correctness of data read by the transaction is ensured. In addition, sending of the primary submission message can be independent of receiving of the backup submission success response. In this way, two steps, namely, sending of the primary submission message and sending of the backup submission message, may be performed in a very short time difference or even in parallel, thereby shortening duration required from starting to process the first transaction to notifying an upper-layer application that processing of the transaction is completed.

In addition, in this embodiment of this application, after modifying the first data item included in the write object, the first node may send the write locking message to the second node, and send the read locking message to the third node. In this way, the second node and the third node may add locks to objects and verify version values in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the third node first returns the read locking success response and the second node then returns the write locking success response, that is, even if the third node successfully verifies the version value of the read object before the second node successfully adds the lock to the write object, because the third node further successfully adds the read lock to the read object when the version value of the read object is successfully verified, the read object is not tampered with by another transaction before the second node successfully adds the write lock to the write object, thereby ensuring correctness of submitted data. It can be learned that in embodiments of this application, transaction processing duration is shortened while correctness of submitted data is ensured.

Next, examples are used in which storage objects for two write operations in a first transaction are W1, a storage object for one read operation is R1, a first node is C, a primary node of W1, namely, a second node, is P1, a backup node, namely, a fourth node, is B1, and a primary node of R1, namely, a third node, is P2. Three example embodiments are used to describe the transaction processing methods shown in FIG. 4 and FIG. 6.

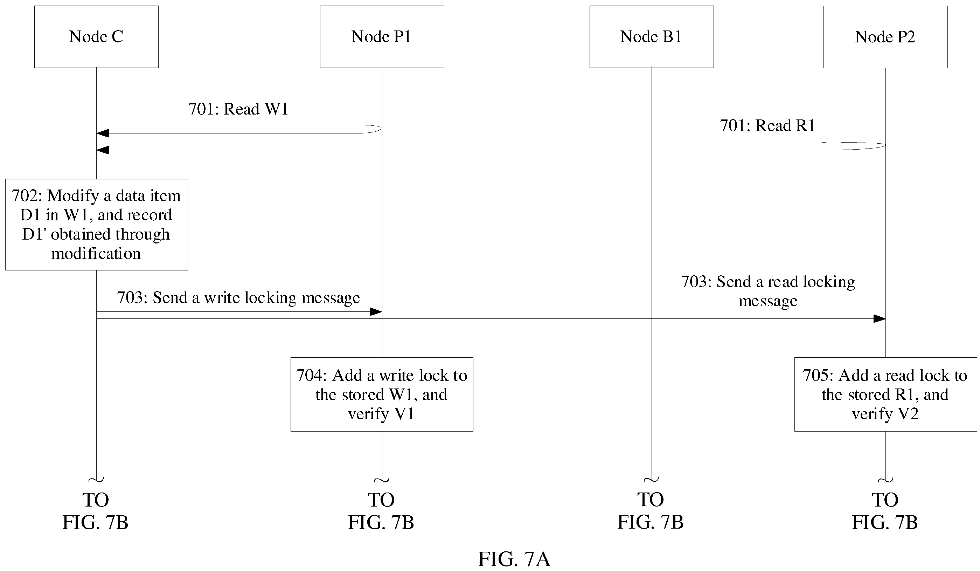

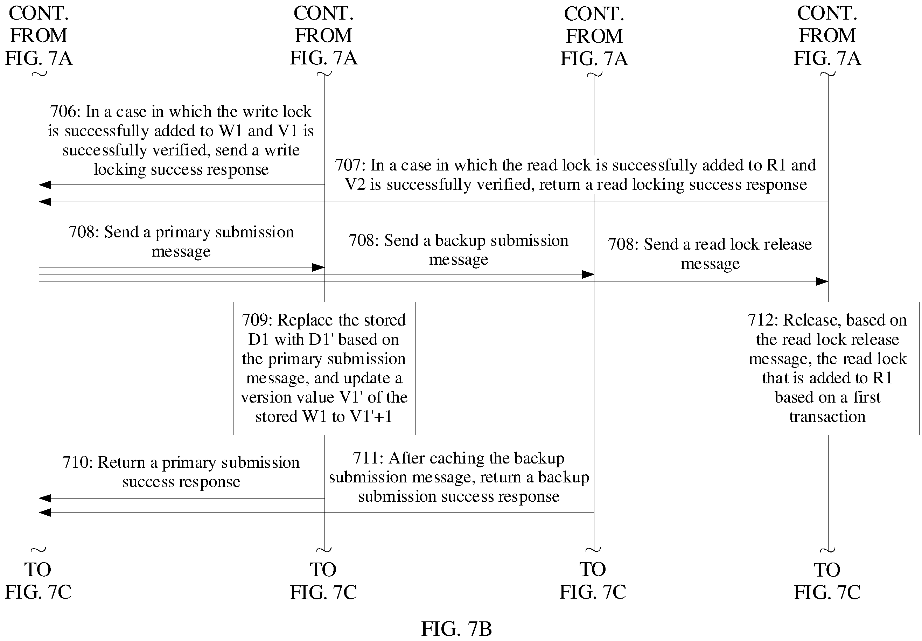

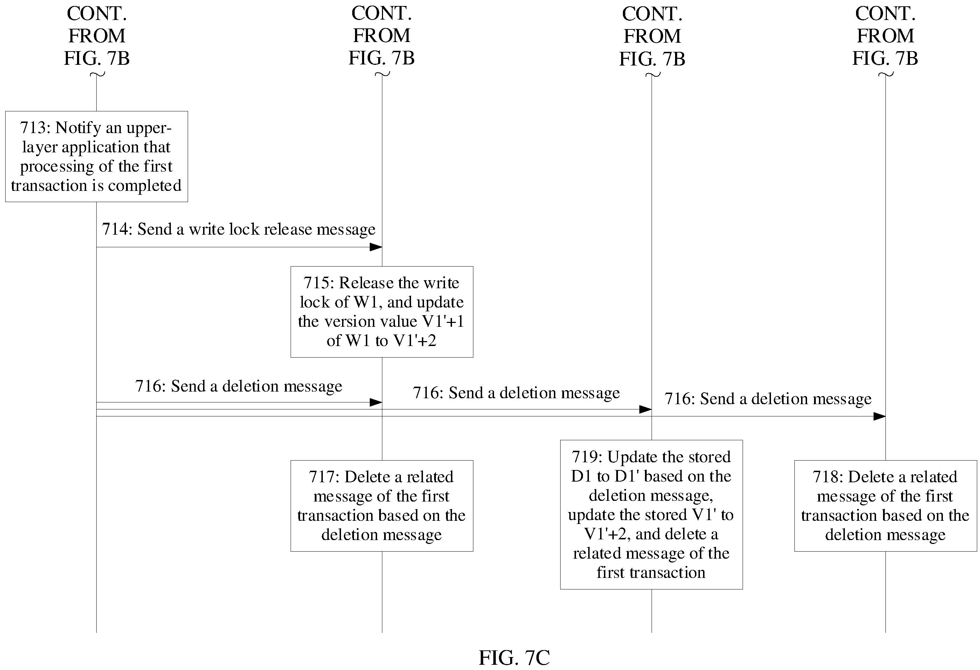

FIG. 7A, FIG. 7B, and FIG. 7C are a flowchart of a transaction processing method according to an embodiment of this application. Refer to FIG. 7A, FIG. 7B, and FIG. 7C. The transaction processing procedure includes the following steps:
Step 701: The node C reads W1 from the node P1, and reads R1 from the node P2.

W1 includes a version value V1 and a data item D1, and R1 includes a version value V2 and a data item D2.

Step 702: The node C modifies the data item D1 in W1, and records D1' obtained through modification.

D1' is an updated first data item.

Step 703: The node C sends a write locking message to the node P1, and sends a read locking message to the node P2 simultaneously.

The write locking message includes (V1, D1'). The read locking message includes V2.

Step 704: The node P1 adds a write lock to the stored W1, and verifies V1.

The node P1 may add the write lock to W1 based on the method described in step 403.

In addition, when V1 is an odd number, that is, V1 is an intermediate-state version value, the node P1 determines whether a version value V1' of W1 stored in the node P1 is equal to V1+1, and if V1' is equal to V1+1, it is determined that the verification is successful. If V1' is not equal to V1+1, it is determined that the verification fails.

When V1 is an even number, that is, V1 is a stable-state version value, the node P1 determines whether the version value V1' of W1 stored in the node P1 is equal to V1, and if V1' is equal to V1, it is determined that the verification is successful. If V1' is not equal to V1, it is determined that the verification fails.

Step 705: The node P2 adds a read lock to the stored R1, and verifies V2.

The node P2 adds the read lock to R1 with reference to the method described in step 403, and verifies V2 with reference to the manner in step 704.

The foregoing steps 704 and 705 are performed in no particular sequence.

Step 706: In a case in which the node P1 successfully adds the write lock to W1 and V1 is successfully verified, the node P1 returns a write locking success response to the node C.

Step 707: In a case in which the node P2 successfully adds the read lock to R1 and V2 is successfully verified, the node P2 returns a read locking success response to the node C.

The foregoing steps 706 and 707 are performed in no particular sequence.

Step 708: The node C sends a primary submission message to the node P1, and sends a backup submission message to the node B1 and sends a read lock release message to the node P2 simultaneously.

Step 709: The node P1 replaces the stored D1 with D1' based on the primary submission message, and updates the version value V1' of the stored W1 to V1'+1.

Step 710: The node P1 returns a primary submission success response to the node C.

Step 711: After caching the backup submission message, the node B1 returns a backup submission success response to the node C.

Step 712: The node P2 releases, based on the read lock release message, the read lock that is added to R1 based on the first transaction.

Step 709 to step 712 are performed in no particular sequence.

Step 713: The node C notifies an upper-layer application that processing of the first transaction is completed.

Step 714: The node C sends a write lock release message to the node P1.

Step 715: The node P1 releases the write lock of W1, and updates the version value V1'+1 of W1 to V1'+2.

Step 716: The node C sends a deletion message to the node P1, the node B1, and the node P2.

Step 717: The node P1 deletes a related message of the first transaction based on the deletion message.

Step 718: The node P2 deletes a related message of the first transaction based on the deletion message.

Step 719: The node B1 updates the stored D1 to D1' based on the deletion message, updates the stored V1' to V1'+2, and deletes a related message of the first transaction.

Steps 717 to 719 are performed in no particular sequence.

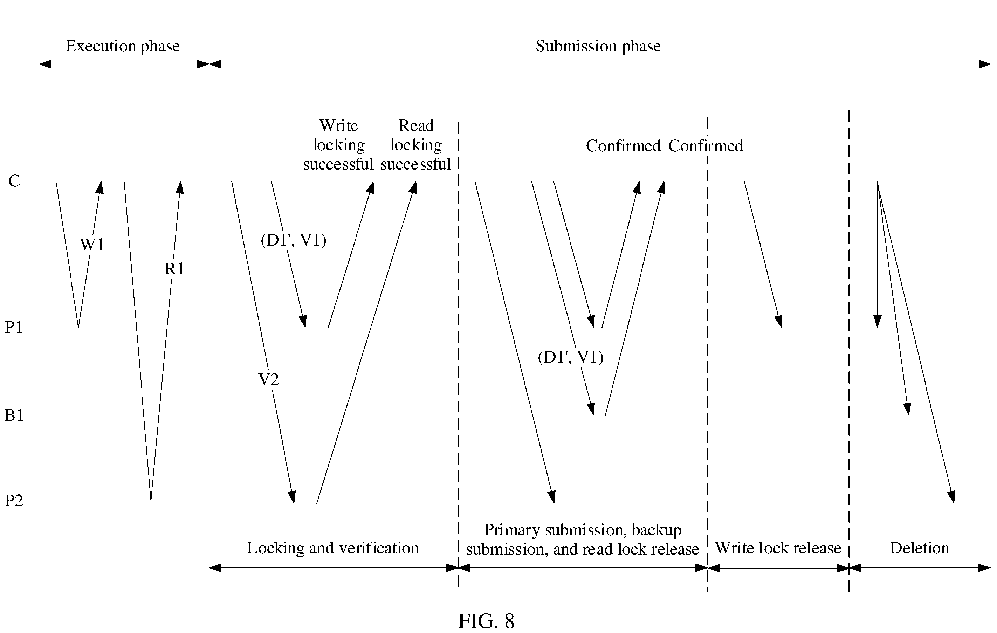

It should be noted that steps 701 and 702 may be referred to as a transaction execution phase, steps 703 to 707 may be referred to as a transaction locking and verification phase, steps 708 to 713 may be referred to as a transaction submission phase, steps 714 and 715 may be referred to as a write lock release phase, and step 716 may be referred to as a deletion phase. A time sequence diagram of interaction between nodes in each phase is shown in FIG. 8. Through comparison between FIG. 8 and FIG. 3, it can be learned that in comparison with a related technology, locking and version value verification of the storage object are performed in parallel in this embodiment of this application, and steps of submitting the updated data item to the primary node and the backup node of the write object are performed in parallel. In this way, a round-trip delay of interaction between nodes in transaction processing is shortened, and transaction processing efficiency is improved. In addition, in comparison with a related technology, duration required from starting to process a transaction to notifying an upper-layer application that processing of the transaction is completed is shorter in this embodiment of this application.

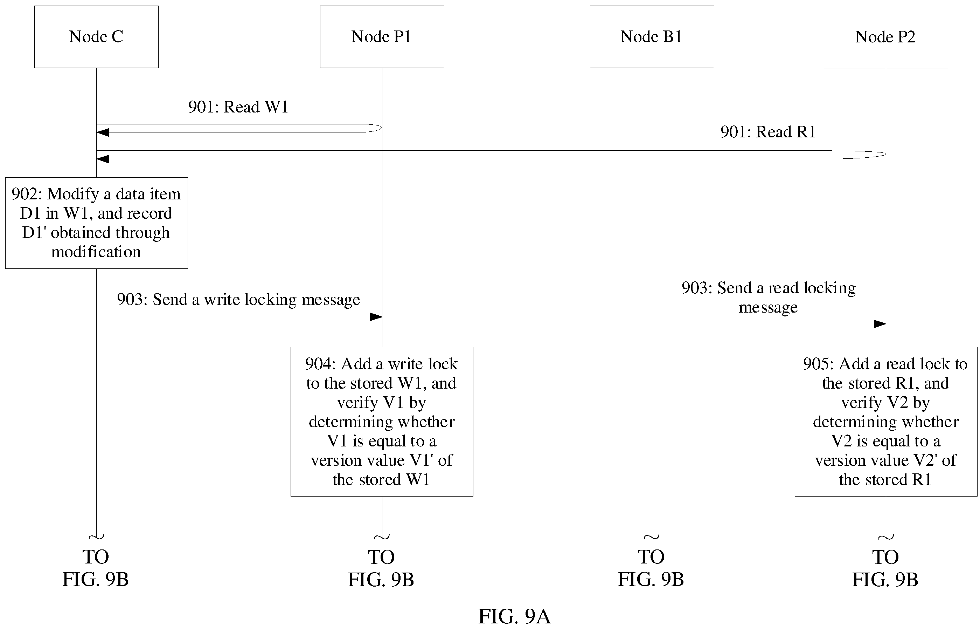

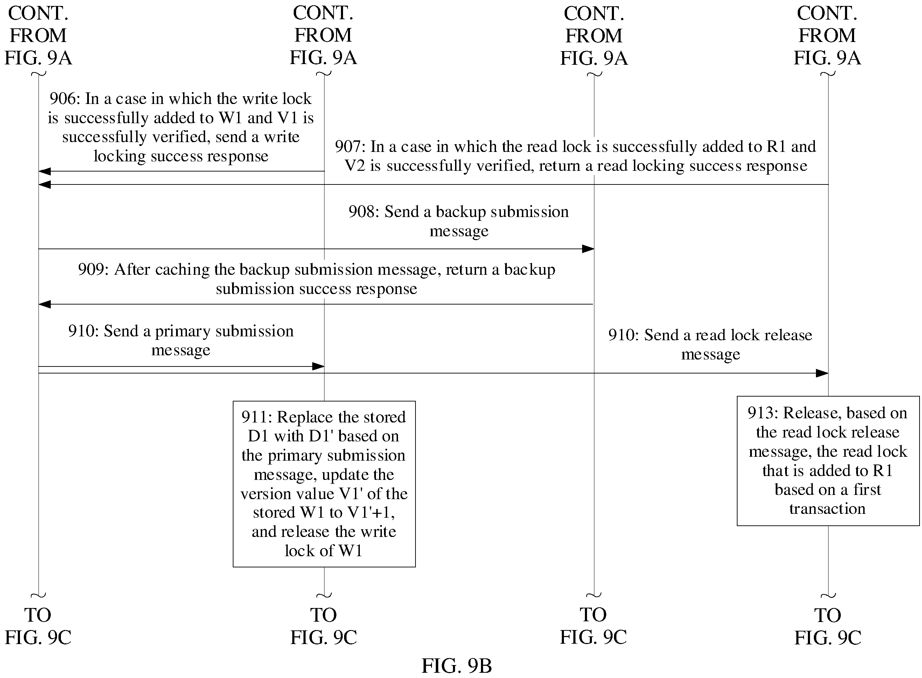

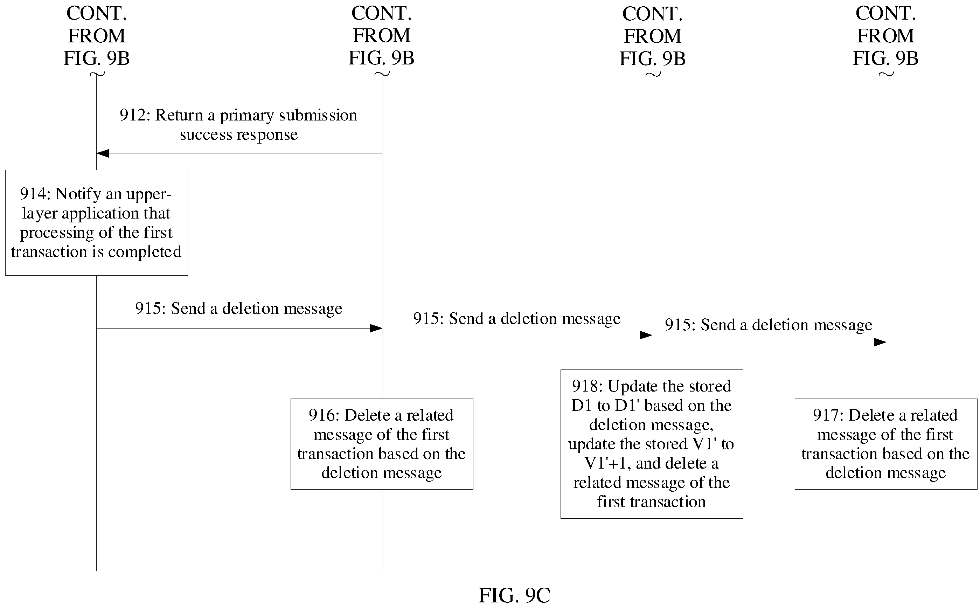

FIG. 9A, FIG. 9B, and FIG. 9C are a flowchart of another transaction processing method according to an embodiment of this application. Refer to FIG. 9A, FIG. 9B, and FIG. 9C. The transaction processing procedure includes the following steps:
Step 901: The node C reads W1 from the node P1, and reads R1 from the node P2.

W1 includes a version value V1 and a data item D1, and R1 includes a version value V2 and a data item D2.

Step 902: The node C modifies the data item D1 in W1, and records D1' obtained through modification.

D1' is an updated first data item.

Step 903: The node C sends a write locking message to the node P1, and sends a read locking message to the node P2 simultaneously.

The write locking message includes (V1, D1'). The read locking message includes V2.

Step 904: The node P1 adds a write lock to the stored W1, and verifies V1 by determining whether V1 is equal to a version value V1' of W1 stored in the node P1.

The node P1 may add the write lock to W1 based on the method described in step 403.

In addition, if V1' is equal to V1, it is determined that the verification is successful. If V1' is not equal to V1, it is determined that the verification fails.

Step 905: The node P2 adds a read lock to the stored R1, and verifies V2 by determining whether V2 is equal to a version value V2' of R1 stored in the node P2.

The node P2 adds the read lock to R1 with reference to the method described in step 403, and verifies V2 with reference to the manner in step 904.

The foregoing steps 904 and 905 are performed in no particular sequence.

Step 906: In a case in which the node P1 successfully adds the write lock to W1 and V1 is successfully verified, the node P1 returns a write locking success response to the node C.

Step 907: In a case in which the node P2 successfully adds the read lock to R1 and V2 is successfully verified, the node P2 returns a read locking success response to the node C.

The foregoing steps 906 and 907 are performed in no particular sequence.

Step 908: The node C sends a backup submission message to the node B1.

Step 909: After caching the backup submission message, the node B1 returns a backup submission success response to the node C.

Step 910: The node C sends a primary submission message to the node P1, and sends a read lock release message to the node P2 simultaneously.

Step 911: The node P1 replaces the stored D1 with D1' based on the primary submission message, updates the version value V1' of the stored W1 to V1'+1, and releases the write lock of W1.

Step 912: The node P1 returns a primary submission success response to the node C.

Step 913: The node P2 releases, based on the read lock release message, the read lock that is added to R1 based on the first transaction.

Step 911 to step 913 are performed in no particular sequence.

Step 914: The node C notifies an upper-layer application that processing of the first transaction is completed.

Step 915: The node C sends a deletion message to the node P1, the node B1, and the node P2.

Step 916: The node P1 deletes a related message of the first transaction based on the deletion message.

Step 917: The node P2 deletes a related message of the first transaction based on the deletion message.

Step 918: The node B1 updates the stored D1 to D1' based on the deletion message, updates the stored V1' to V1'+1, and deletes a related message of the first transaction.

Steps 916 to 918 are performed in no particular sequence.

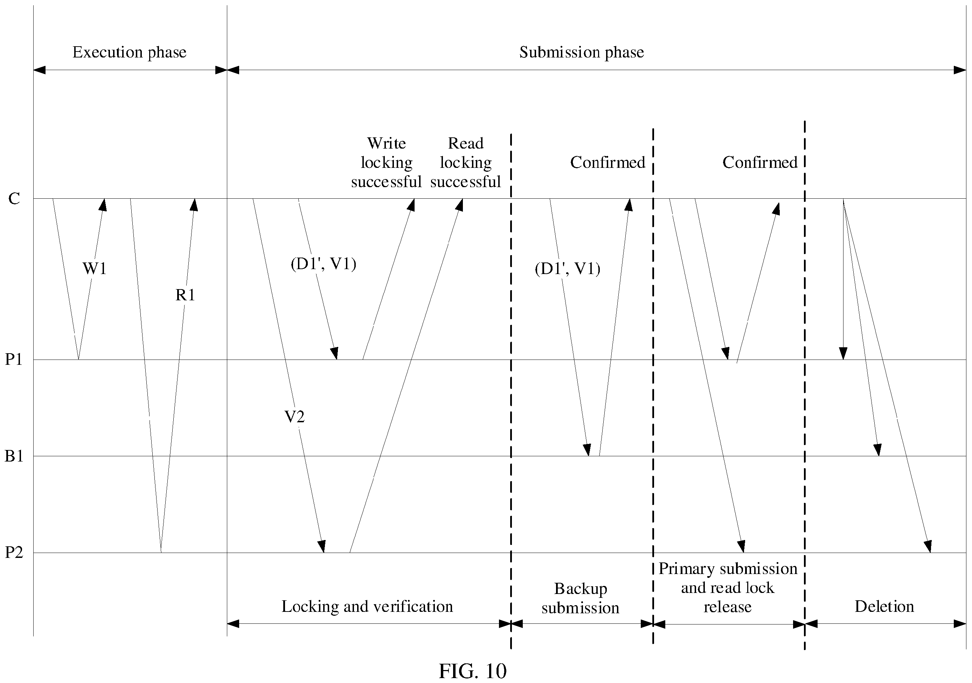

It should be noted that steps 901 and 902 may be referred to as a transaction execution phase, steps 903 to 907 may be referred to as a transaction locking and verification phase, steps 908 to 914 may be referred to as a transaction submission phase, and step 915 to step 918 may be referred to as a deletion phase. A time sequence diagram of interaction between nodes in each phase is shown in FIG. 10. Through comparison between FIG. 10 and FIG. 3, it can be learned that in comparison with a related technology, locking and version value verification of the storage object are performed in parallel in this embodiment of this application. In this way, a round-trip delay of interaction between nodes in transaction processing is shortened, and transaction processing efficiency is improved. In addition, in comparison with a related technology, duration required from starting to process a transaction to notifying an upper-layer application that processing of the transaction is completed is shorter in this embodiment of this application.

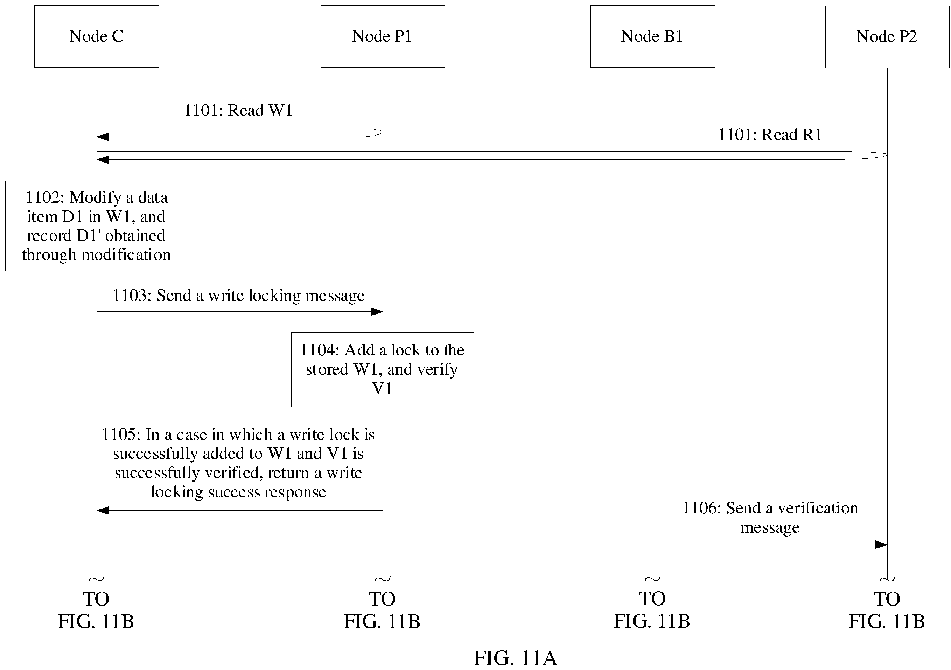

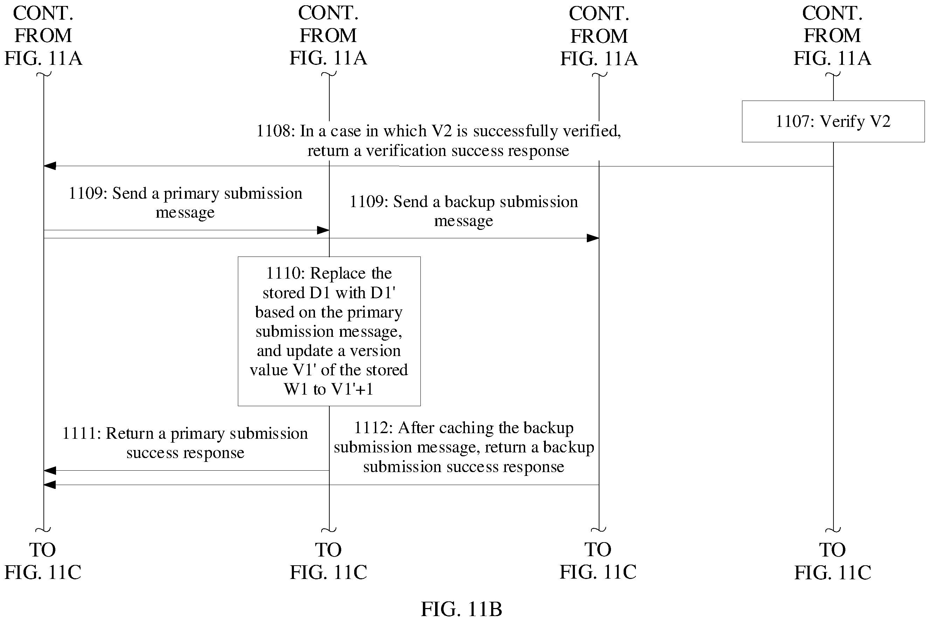

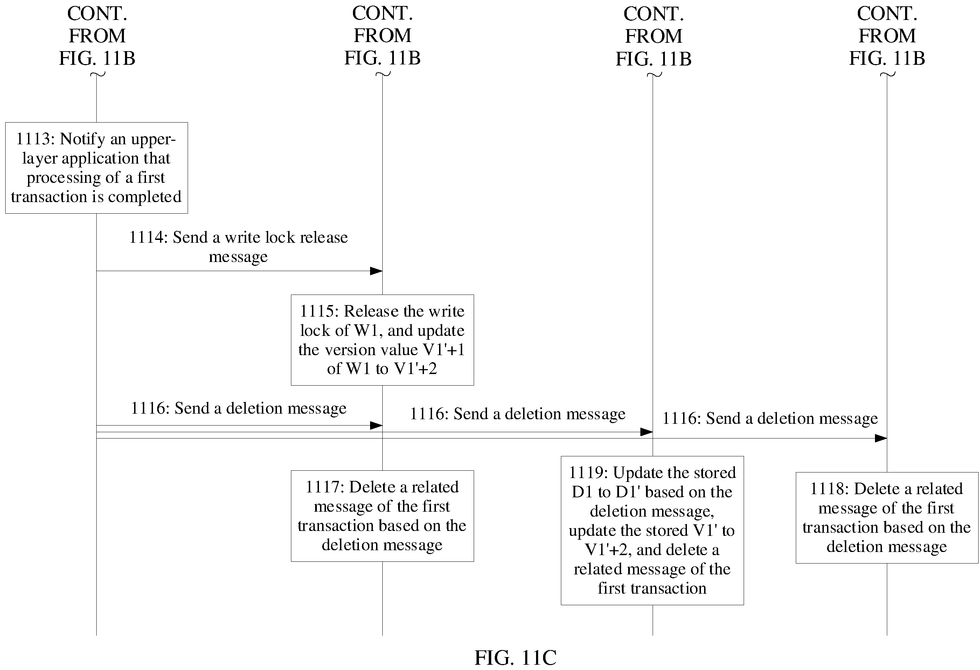

FIG. 11A, FIG. 11B, and FIG. 11C are a flowchart of another transaction processing method according to an embodiment of this application. Refer to FIG. 11A, FIG. 11B, and FIG. 11C. The transaction processing procedure includes the following steps:
Step 1101: The node C reads W1 from the node P1, and reads R1 from the node P2.

W1 includes a version value V1 and a data item D1, and R1 includes a version value V2 and a data item D2.

Step 1102: The node C modifies the data item D1 in W1, and records D1' obtained through modification.

D1' is an updated first data item.

Step 1103: The node C sends a write locking message to the node P1.

The write locking message includes (V1, D1').

Step 1104: The node P1 adds a lock to the stored W1, and verifies V1.

The node P1 may add a write lock to W1 based on the method described in step 603.

In addition, the node P1 may verify V1 in the manner described in step 704.

Step 1105: In a case in which the node P1 successfully adds the write lock to W1 and V1 is successfully verified, the node P1 returns a write locking success response to the node C.

Step 1106: The node C sends a verification message to the node P2.

The verification message includes V2.

Step 1107: The node P2 verifies V2.

The node P2 verifies V2 with reference to the manner in the foregoing step 704.

Step 1108: In a case in which V2 is successfully verified, the node P2 returns a verification success response to the node C.

Step 1109: The node C sends a primary submission message to the node P1, and sends a backup submission message to the node B1 simultaneously.

Step 1110: The node P1 replaces the stored D1 with D1' based on the primary submission message, and updates a version value V1' of the stored W1 to V1'+1.

Step 1111: The node P1 returns a primary submission success response to the node C.

Step 1112: After caching the backup submission message, the node B1 returns a backup submission success response to the node C.

Step 1110 to step 1112 are performed in no particular sequence.

Step 1113: The node C notifies an upper-layer application that processing of the first transaction is completed.

Step 1114: The node C sends a write lock release message to the node P1.

Step 1115: The node P1 releases the write lock of W1, and updates the version value V1'+1 of W1 to V1'+2.

Step 1116: The node C sends a deletion message to the node P1, the node B1, and the node P2.

Step 1117: The node P1 deletes a related message of the first transaction based on the deletion message.

Step 1118: The node P2 deletes a related message of the first transaction based on the deletion message.

Step 1119: The node B1 updates the stored D1 to D1' based on the deletion message, updates the stored V1' to V1'+2, and deletes a related message of the first transaction.

Steps 1117 to 1119 are performed in no particular sequence.

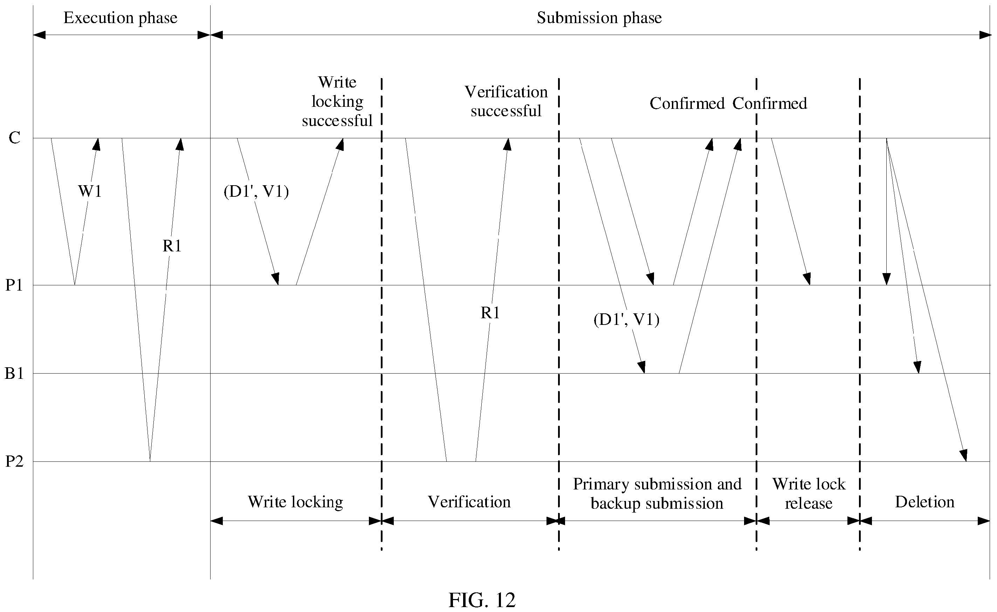

It should be noted that steps 1101 and 1102 may be referred to as a transaction execution phase, steps 1103 to 1105 may be referred to as a transaction locking phase, steps 1106 to 1108 may be referred to as a verification phase, steps 1109 to 1113 may be referred to as a transaction submission phase, steps 1114 and 1115 may be referred to as a write lock release phase, and step 1116 to step 1119 may be referred to as a deletion phase. A time sequence diagram of interaction between nodes in each phase is shown in FIG. 12. Through comparison between FIG. 12 and FIG. 3, it can be learned that in comparison with a related technology, steps of submitting the updated data item to the primary node and the backup node of the write object are performed in parallel in this embodiment of this application. In this way, in comparison with a related technology, duration required from starting to process a transaction to notifying an upper-layer application that processing of the transaction is completed is shorter in this embodiment of this application.

The foregoing is described by using an example in which quantities of both the write object and the read object corresponding to the first transaction are one. It should be noted that a quantity of write objects to be operated by the first transaction may be more than one, and a quantity of read objects may also be more than one. Alternatively, the first transaction may include a write object but does not include a read object, or include a read object but does not include a write object. When the first transaction includes the write object but does not include the read object, an operation step related to the read object in the transaction processing procedure described in the foregoing embodiments may be deleted, to perform an operation on the write object. When the first transaction includes the read object but does not include the write object, an operation step related to the write object in the transaction processing procedure described in the foregoing embodiments may be deleted, to perform an operation on the read object. Details are not described herein again in this embodiment of this application.

The following describes a transaction processing apparatus provided in embodiments of this application.

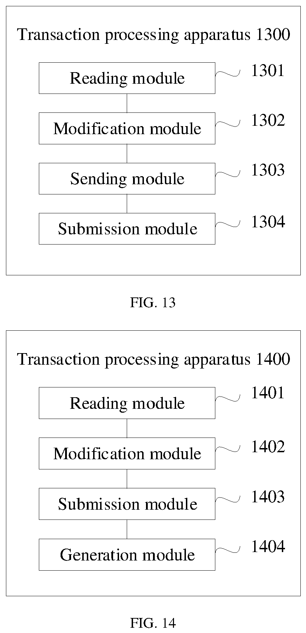

FIG. 13 is a diagram of a structure of a transaction processing apparatus according to an embodiment of this application. The transaction processing apparatus may be deployed in the first node described above. As shown in FIG. 13, the transaction processing apparatus 1300 includes a reading module 1301, a modification module 1302, a sending module 1303, and a submission module 1304.

The reading module 1301 is configured to perform step 401 in the foregoing embodiment.

The modification module 1302 is configured to perform step 402 in the foregoing embodiment.

The sending module 1303 is configured to perform step 403 in the foregoing embodiment.

The submission module 1304 is configured to perform step 404 in the foregoing embodiment.

Optionally, the sending module 1303 is mainly configured to:
send a write locking message to a second node, and send a read locking message to a third node simultaneously; or send the write locking message to the second node, and send the read locking message to the third node when a write locking success response is not received after the write locking message is sent; or send the read locking message to the third node, and send the write locking message to the second node when a read locking success response is not received after the read locking message is sent.

Optionally, the sending module 1303 is further configured to:
when the submission module 1304 submits an updated first data item to the second node and a fourth node, send a read lock release message to the third node. The read lock release message indicates the third node to release a read lock of the read object.

Optionally, the sending module 1303 is further configured to:
in a case in which a write locking failure response from the second node and/or a read locking failure response from the third node are/is received, send a procedure abort message to the second node and the third node. The write locking failure response indicates that a write lock fails to be added to the write object and/or the write object read by the first node is incorrect. The read locking failure response indicates that the read lock fails to be added to the read object and/or the read object read by the first node is incorrect. The procedure abort message indicates to abort processing of the first transaction. The procedure abort message further indicates the second node and the third node to unlock an object to which a lock is successfully added.

Optionally, both the write object and the read object that are read by the first node include version values. The write locking message includes a version value of the write object read by the first node. The read locking message includes a version value of the read object read by the first node. That the write object or the read object read by the first node is correct means that a version value of a corresponding object read by the first node meets a verification condition.

Optionally, the verification condition means that the version value of the corresponding object read by the first node is an intermediate-state version value and a version value of the corresponding object in a corresponding primary node is a stable-state version value corresponding to the version value of the corresponding object read by the first node; or the verification condition means that the version value of the corresponding object read by the first node is a stable-state version value and a version value of the corresponding object in a corresponding primary node is the same as the version value of the corresponding object read by the first node. The intermediate-state version value indicates that the updated data item of the corresponding object is not successfully submitted, and the stable-state version value indicates that the updated data item of the corresponding object is successfully submitted.

Optionally, the write locking message further includes the updated first data item. The submission module 1304 is mainly configured to:
send a primary submission message to the second node, and send a backup submission message to the fourth node, where the backup submission message includes the updated first data item; and
in a case in which a primary submission success response from the second node and a backup submission success response from the fourth node are received, determine that the updated first data item is successfully submitted. The primary submission success response is sent by the second node after updating a data item and a first version value of the stored write object based on the primary submission message and the updated first data item. An updated write object includes a second version value. The second version value is a next intermediate-state version value of the first version value. The backup submission success response is sent by the fourth node after the backup submission message is received.

Optionally, the submission module 1304 is mainly configured to:
send the primary submission message to the second node, and send the backup submission message to the fourth node simultaneously; or
send the backup submission message to the fourth node, and send the primary submission message to the second node when the backup submission success response is not received after the backup submission message is sent; or
send the primary submission message to the second node, and send the backup submission message to the fourth node when the primary submission success response is not received after the primary submission message is sent.

Optionally, the sending module 1303 is further configured to:
in a case in which the primary submission success response from the second node and/or the backup submission success response from the fourth node are/is not received, send a procedure abort message to the second node, the third node, and the fourth node. The procedure abort message indicates to abort processing of the first transaction, and the procedure abort message further indicates the second node and the third node to unlock an object to which a lock is successfully added.

Optionally, the sending module 1303 is further configured to:
send a write lock release message to the second node. The write lock release message indicates the second node to update the second version value to a third version value and release a write lock of the updated write object. The third version value is a stable-state version value corresponding to the second version value.

Optionally, the sending module 1303 is further configured to:
send a first deletion message to the second node, where the first deletion message indicates the second node to delete the write locking message and the primary submission message; and
send a second deletion message to the fourth node, where the second deletion message indicates the fourth node to update the data item and the first version value of the stored write object based on the backup submission message and delete the backup submission message.

In embodiments of this application, the first node reads the write object from the second node and reads the read object from the third node. After modifying the first data item included in the write object, the first node may send the write locking message to the second node and send the read locking message to the third node. In this way, the second node and the third node may add locks to objects and verify version values in no particular sequence. That is, the first node may initiate locking and version value verification of the write object and version value verification of the read object in parallel. In this way, in comparison with a related technology in which a version value of the read object is verified after a lock is successfully added to the write object and version value verification succeeds, this shortens transaction processing duration. In addition, in embodiments of this application, even if the third node first returns the read locking success response and the second node then returns the write locking success response, that is, even if the third node successfully verifies the version value of the read object before the second node successfully adds the lock to the write object, because the third node further successfully adds the read lock to the read object when the version value of the read object is successfully verified, the read object is not tampered with by another transaction before the second node successfully adds the write lock to the write object, thereby ensuring correctness of submitted data. It can be learned that in embodiments of this application, transaction processing duration is shortened while correctness of submitted data is ensured.

FIG. 14 is a diagram of a structure of another transaction processing apparatus according to an embodiment of this application. The transaction processing apparatus is deployed in a first node. Refer to FIG. 14. The transaction processing apparatus 1400 includes a reading module 1401, a modification module 1402, a submission module 1403, and a generation module 1404.

The reading module 1401 is configured to perform step 601 in the foregoing embodiment.

The modification module 1402 is configured to perform step 602 in the foregoing embodiment.

The submission module 1403 is configured to perform step 603 in the foregoing embodiment.

The generation module 1404 is configured to perform step 604 in the foregoing embodiment.

Optionally, the submission module 1403 is mainly configured to:
send a primary submission message to a second node, and send a backup submission message to a fourth node simultaneously; or
send the backup submission message to the fourth node, and send the primary submission message to the second node when a backup submission success response is not received after the backup submission message is sent; or
send the primary submission message to the second node, and send the backup submission message to the fourth node when a primary submission success response is not received after the primary submission message is sent.

Optionally, the apparatus 1400 further includes:
a sending module, configured to send a write lock release message to the second node. The write lock release message indicates the second node to update the second version value to a third version value and release a write lock of the updated write object, and the third version value is a stable-state version value corresponding to the second version value.

In this embodiment of this application, a version value of a storage object may include a stable-state version value and an intermediate-state version value. The intermediate-state version value indicates that an updated data item of the storage object is not successfully submitted, and the stable-state version value indicates that an updated data item of the storage object is successfully submitted. On this basis, switching between the two version values can identify a state of the write object. Therefore, even if the first node sends the primary submission message before receiving the backup submission success response, the second node may also switch the version value of the write object to the intermediate-state version value, to indicate that the write object is in a modification process. In this way, for another transaction that needs to modify the write object, the version value of the write object read by the second node can be verified based on the intermediate-state version value, thereby ensuring correctness of data. In this way, through switching between the two version values, a write conflict in a transaction for a storage object is avoided, and correctness of data read by the transaction is ensured. In addition, sending of the primary submission message can be independent of receiving of the backup submission success response. In this way, two steps, namely, sending of the primary submission message and sending of the backup submission message, may be performed in a very short time difference or even in parallel, thereby shortening duration required from starting to process the first transaction to notifying an upper-layer application that processing of the transaction is completed.

It should be noted that when the transaction processing apparatus provided in the foregoing embodiments processes a transaction, division into the foregoing functional modules is merely an example for description. In actual application, the functions may be allocated to different functional modules for implementation as required. That is, an internal structure of the device is divided into different functional modules to implement all or some of the functions described above. Furthermore, the transaction processing apparatuses provided in the foregoing embodiments and the transaction processing method embodiment pertain to a same concept. For a specific implementation process of the apparatuses, refer to the method embodiments. Details are not described herein again.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semiconductor medium (for example, a solid-state disk (solid-state disk, SSD)).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of this application, but are not intended to limit this application. Any modification, equivalent replacement, or improvement made without departing from the spirit and principle of this application should fall within the protection scope of this application.

## Claims

1. A transaction processing method, applied to a first node, wherein the method comprises:
based on information about a write object and information about a read object that are comprised in a first transaction, reading the write object from a second node, and reading the read object from a third node, wherein the write object comprises a first data item, the second node is a primary node in which the write object is located, and the third node is a primary node in which the read object is located;
modifying the first data item to obtain an updated first data item;
sending a write locking message to the second node, and sending a read locking message to the third node, wherein the read locking message is used to add a read lock to the read object and detect whether the read object read by the first node is correct; and
in a case in which a write locking success response from the second node and a read locking success response from the third node are received, submitting the updated first data item to the second node and a fourth node, wherein the write locking success response indicates that a write lock is successfully added to the write object and the write object that is read is correct, the read locking success response indicates that the read lock is successfully added to the read object and the read object that is read is correct, and the fourth node is a backup node of the write object.

2. The method according to claim 1, wherein the sending a write locking message to the second node, and sending a read locking message to the third node comprises:
sending the write locking message to the second node, and sending the read locking message to the third node simultaneously; or
sending the write locking message to the second node, and sending the read locking message to the third node when the write locking success response is not received after the write locking message is sent; or
sending the read locking message to the third node, and sending the write locking message to the second node when the read locking success response is not received after the read locking message is sent.

3. The method according to claim 1 or 2, wherein when the updated first data item is submitted to the second node and the fourth node, the method further comprises:
sending a read lock release message to the third node, wherein the read lock release message indicates the third node to release the read lock of the read object.

4. The method according to claim 1 or 2, wherein the method further comprises:
in a case in which a write locking failure response from the second node and/or a read locking failure response from the third node are/is received, sending a procedure abort message to the second node and the third node, wherein the write locking failure response indicates that the write lock fails to be added to the write object and/or the write object read by the first node is incorrect, the read locking failure response indicates that the read lock fails to be added to the read object and/or the read object read by the first node is incorrect, the procedure abort message indicates to abort processing of the first transaction, and the procedure abort message further indicates the second node and the third node to unlock an object to which a lock is successfully added.

5. The method according to claim 1, wherein both the write object and the read object that are read by the first node comprise version values, the write locking message comprises a version value of the write object read by the first node, the read locking message comprises a version value of the read object read by the first node, and that the write object or the read object read by the first node is correct means that a version value of a corresponding object read by the first node meets a verification condition.

6. The method according to claim 5, wherein the verification condition means that the version value of the corresponding object read by the first node is an intermediate-state version value and a version value of the corresponding object in a corresponding primary node is a stable-state version value corresponding to the version value of the corresponding object read by the first node, or the verification condition means that the version value of the corresponding object read by the first node is a stable-state version value and a version value of the corresponding object in a corresponding primary node is the same as the version value of the corresponding object read by the first node, wherein the intermediate-state version value indicates that an updated data item of the corresponding object is not successfully submitted, and the stable-state version value indicates that the updated data item of the corresponding object is successfully submitted.

7. The method according to claim 6, wherein the write locking message further comprises the updated first data item; and
the submitting the updated first data item to the second node and a fourth node comprises:
sending a primary submission message to the second node, and sending a backup submission message to the fourth node, wherein the backup submission message comprises the updated first data item; and
in a case in which a primary submission success response from the second node and a backup submission success response from the fourth node are received, determining that the updated first data item is successfully submitted, wherein the primary submission success response is sent by the second node after updating a data item and a first version value of the stored write object based on the primary submission message and the updated first data item, an updated write object comprises a second version value, the second version value is a next intermediate-state version value of the first version value, and the backup submission success response is sent by the fourth node after the backup submission message is received.

8. The method according to claim 7, wherein the sending a primary submission message to the second node, and sending a backup submission message to the fourth node comprises:
sending the primary submission message to the second node, and sending the backup submission message to the fourth node simultaneously; or
sending the backup submission message to the fourth node, and sending the primary submission message to the second node when the backup submission success response is not received after the backup submission message is sent; or
sending the primary submission message to the second node, and sending the backup submission message to the fourth node when the primary submission success response is not received after the primary submission message is sent.

9. The method according to claim 7, wherein the method further comprises:
in a case in which the primary submission success response from the second node and/or the backup submission success response from the fourth node are/is not received, sending a procedure abort message to the second node, the third node, and the fourth node, wherein the procedure abort message indicates to abort processing of the first transaction, and the procedure abort message further indicates the second node and the third node to unlock an object to which a lock is successfully added.

10. The method according to claim 7 or 8, wherein after the updated first data item is successfully submitted, the method further comprises:
sending a write lock release message to the second node, wherein the write lock release message indicates the second node to update the second version value to a third version value and release a write lock of the updated write object, and the third version value is a stable-state version value corresponding to the second version value.

11. The method according to claim 7, 8, or 10, wherein after the updated first data item is successfully submitted, the method further comprises:
sending a first deletion message to the second node, wherein the first deletion message indicates the second node to delete the write locking message and the primary submission message; and
sending a second deletion message to the fourth node, wherein the second deletion message indicates the fourth node to update the data item and the first version value of the stored write object based on the backup submission message and delete the backup submission message.

12. A transaction processing method, applied to a first node, wherein the method comprises:
based on information about a write object and information about a read object that are comprised in a first transaction, reading the write object from a second node, and reading the read object from a third node, wherein both the write object and the read object comprise version values, the write object comprises a first data item, the second node is a primary node in which the write object is located, and the third node is a primary node in which the read object is located;
modifying the first data item to obtain an updated first data item;
in a case in which a write lock is successfully added to the write object in the second node and both the write object and the read object that are read by the first node are correct, sending, to the second node, a primary submission message for submitting the updated first data item, and sending, to a fourth node, a backup submission message for submitting the updated first data item, wherein that the write object or the read object that is read by the first node is correct means that a version value of a corresponding object read by the first node is an intermediate-state version value and a version value of the corresponding object in a corresponding primary node is a stable-state version value corresponding to the version value of the corresponding object read by the first node, or means that a version value of a corresponding object read by the first node is a stable-state version value and a version value of the corresponding object in a corresponding primary node is the same as the version value of the corresponding object read by the first node, wherein the intermediate-state version value indicates that an updated data item of the corresponding object is not successfully submitted, the stable-state version value indicates that the updated data item of the corresponding object is successfully submitted, and the fourth node is a backup node of the write object; and
in a case in which a primary submission success response from the second node and a backup submission success response from the fourth node are received, generating a transaction completion notification, wherein the primary submission success response is sent by the second node after updating a data item and a first version value of the stored write object based on the primary submission message and the updated first data item, an updated write object comprises a second version value, the second version value is a next intermediate-state version value of the first version value, and the backup submission success response is sent by the fourth node after the backup submission message is received.

13. The method according to claim 12, wherein the sending, to the second node, a primary submission message for submitting the updated first data item, and sending, to a fourth node, a backup submission message for submitting the updated first data item comprises:
sending the primary submission message to the second node, and sending the backup submission message to the fourth node simultaneously; or
sending the backup submission message to the fourth node, and sending the primary submission message to the second node when the backup submission success response is not received after the backup submission message is sent; or
sending the primary submission message to the second node, and sending the backup submission message to the fourth node when the primary submission success response is not received after the primary submission message is sent.

14. The method according to claim 12 or 13, wherein after the generating a transaction completion notification, the method further comprises:
sending a write lock release message to the second node, wherein the write lock release message indicates the second node to update the second version value to a third version value and release a write lock of the updated write object, and the third version value is a stable-state version value corresponding to the second version value.

15. A transaction processing apparatus, applied to a first node, wherein the apparatus comprises:
a reading module, configured to: based on information about a write object and information about a read object that are comprised in a first transaction, read the write object from a second node, and read the read object from a third node, wherein the write object comprises a first data item, the second node is a primary node in which the write object is located, and the third node is a primary node in which the read object is located;
a modification module, configured to modify the first data item to obtain an updated first data item;
a sending module, configured to send a write locking message to the second node, and send a read locking message to the third node, wherein the read locking message is used to add a read lock to the read object and detect whether the read object read by the first node is correct; and
a submission module, configured to: in a case in which a write locking success response from the second node and a read locking success response from the third node are received, submit the updated first data item to the second node and a fourth node, wherein the write locking success response indicates that a write lock is successfully added to the write object and the write object that is read is correct, the read locking success response indicates that the read lock is successfully added to the read object and the read object that is read is correct, and the fourth node is a backup node of the write object.

16. The apparatus according to claim 15, wherein the sending module is mainly configured to:
send the write locking message to the second node, and send the read locking message to the third node simultaneously; or
send the write locking message to the second node, and send the read locking message to the third node when the write locking success response is not received after the write locking message is sent; or
send the read locking message to the third node, and send the write locking message to the second node when the read locking success response is not received after the read locking message is sent.

17. The apparatus according to claim 15 or 16, wherein the sending module is further configured to:
when the submission module submits the updated first data item to the second node and the fourth node, send a read lock release message to the third node, wherein the read lock release message indicates the third node to release the read lock of the read object.

18. The apparatus according to claim 15 or 16, wherein the sending module is further configured to:
in a case in which a write locking failure response from the second node and/or a read locking failure response from the third node are/is received, send a procedure abort message to the second node and the third node, wherein the write locking failure response indicates that the write lock fails to be added to the write object and/or the write object read by the first node is incorrect, the read locking failure response indicates that the read lock fails to be added to the read object and/or the read object read by the first node is incorrect, the procedure abort message indicates to abort processing of the first transaction, and the procedure abort message further indicates the second node and the third node to unlock an object to which a lock is successfully added.

19. The apparatus according to claim 15, wherein both the write object and the read object that are read by the first node comprise version values, the write locking message comprises a version value of the write object read by the first node, the read locking message comprises a version value of the read object read by the first node, and that the write object or the read object read by the first node is correct means that a version value of a corresponding object read by the first node meets a verification condition.

20. The apparatus according to claim 19, wherein the verification condition means that the version value of the corresponding object read by the first node is an intermediate-state version value and a version value of the corresponding object in a corresponding primary node is a stable-state version value corresponding to the version value of the corresponding object read by the first node, or the verification condition means that the version value of the corresponding object read by the first node is a stable-state version value and a version value of the corresponding object in a corresponding primary node is the same as the version value of the corresponding object read by the first node, wherein the intermediate-state version value indicates that an updated data item of the corresponding object is not successfully submitted, and the stable-state version value indicates that the updated data item of the corresponding object is successfully submitted.

21. The apparatus according to claim 20, wherein the write locking message further comprises the updated first data item, and the submission module is mainly configured to:
send a primary submission message to the second node, and send a backup submission message to the fourth node, wherein the backup submission message comprises the updated first data item; and
in a case in which a primary submission success response from the second node and a backup submission success response from the fourth node are received, determine that the updated first data item is successfully submitted, wherein the primary submission success response is sent by the second node after updating a data item and a first version value of the stored write object based on the primary submission message and the updated first data item, an updated write object comprises a second version value, the second version value is a next intermediate-state version value of the first version value, and the backup submission success response is sent by the fourth node after the backup submission message is received.

22. The apparatus according to claim 21, wherein the submission module is mainly configured to:
send the primary submission message to the second node, and send the backup submission message to the fourth node simultaneously; or
send the backup submission message to the fourth node, and send the primary submission message to the second node when the backup submission success response is not received after the backup submission message is sent; or
send the primary submission message to the second node, and send the backup submission message to the fourth node when the primary submission success response is not received after the primary submission message is sent.

23. The apparatus according to claim 21, wherein the sending module is further configured to:
in a case in which the primary submission success response from the second node and/or the backup submission success response from the fourth node are/is not received, send a procedure abort message to the second node, the third node, and the fourth node, wherein the procedure abort message indicates to abort processing of the first transaction, and the procedure abort message further indicates the second node and the third node to unlock an object to which a lock is successfully added.

24. The apparatus according to claim 21 or 22, wherein the sending module is further configured to:
send a write lock release message to the second node, wherein the write lock release message indicates the second node to update the second version value to a third version value and release a write lock of the updated write object, and the third version value is a stable-state version value corresponding to the second version value.

25. The apparatus according to claim 21, 22 or 24, wherein the sending module is further configured to:
send a first deletion message to the second node, wherein the first deletion message indicates the second node to delete the write locking message and the primary submission message; and
send a second deletion message to the fourth node, wherein the second deletion message indicates the fourth node to update the data item and the first version value of the stored write object based on the backup submission message and delete the backup submission message.

26. A transaction processing apparatus, applied to a first node, wherein the apparatus comprises:
a reading module, configured to: based on information about a write object and information about a read object that are comprised in a first transaction, read the write object from a second node, and read the read object from a third node, wherein both the write object and the read object comprise version values, the write object comprises a first data item, the second node is a primary node in which the write object is located, and the third node is a primary node in which the read object is located;
a modification module, configured to modify the first data item to obtain an updated first data item;
a submission module, configured to: in a case in which a write lock is successfully added to the write object in the second node and both the write object and the read object that are read by the first node are correct, send, to the second node, a primary submission message for submitting the updated first data item, and send, to a fourth node, a backup submission message for submitting the updated first data item, wherein that the write object or the read object that is read by the first node is correct means that a version value of a corresponding object read by the first node is an intermediate-state version value and a version value of the corresponding object in a corresponding primary node is a stable-state version value corresponding to the version value of the corresponding object read by the first node, or means that a version value of a corresponding object read by the first node is a stable-state version value and a version value of the corresponding object in a corresponding primary node is the same as the version value of the corresponding object read by the first node, wherein the intermediate-state version value indicates that an updated data item of the corresponding object is not successfully submitted, the stable-state version value indicates that the updated data item of the corresponding object is successfully submitted, and the fourth node is a backup node of the write object; and
a generation module, configured to: in a case in which a primary submission success response from the second node and a backup submission success response from the fourth node are received, generate a transaction completion notification, wherein the primary submission success response is sent by the second node after updating a data item and a first version value of the stored write object based on the primary submission message and the updated first data item, an updated write object comprises a second version value, the second version value is a next intermediate-state version value of the first version value, and the backup submission success response is sent by the fourth node after the backup submission message is received.

27. The apparatus according to claim 26, wherein the submission module is mainly configured to:
send the primary submission message to the second node, and send the backup submission message to the fourth node simultaneously; or
send the backup submission message to the fourth node, and send the primary submission message to the second node when the backup submission success response is not received after the backup submission message is sent; or
send the primary submission message to the second node, and send the backup submission message to the fourth node when the primary submission success response is not received after the primary submission message is sent.

28. The apparatus according to claim 26 or 27, wherein the apparatus further comprises:
a sending module, configured to send a write lock release message to the second node, wherein the write lock release message indicates the second node to update the second version value to a third version value and release a write lock of the updated write object, and the third version value is a stable-state version value corresponding to the second version value.

29. A node, comprising a processor and a memory, wherein the memory is configured to store at least one program instruction or code, and the processor is configured to execute the at least one program instruction or the code stored in the memory, to implement the transaction processing method according to any one of claims 1 to 11 or claims 12 to 14.

30. A computer-readable storage medium, wherein the computer-readable storage medium stores instructions, and when the instructions are run on a computer, the computer is enabled to perform the transaction processing method according to any one of claims 1 to 11 or claims 12 to 14.
